# EUROPEAN PATENT APPLICATION

(11) **EP 3 244 365 A1**
(43) Date of publication of application: **15.11.2017**
(21) Application number: 17164199.6
(22) Date of filing: 19.06.2012
(51) Int. Cl.: G06Q 30/02, G06Q 30/06

(54) **SEARCH DEVICE, SEARCH PROGRAM, COMPUTER-READABLE RECORDING MEDIUM IN WHICH SEARCH PROGRAM IS RECORDED, AND SEARCH METHOD**

(30) Priority: 20.07.2011 JP 2011158899
(62) Divisional of application: 12814586.9
(71) Applicant: Rakuten, Inc., Tokyo 158-0094 (JP)
(72) Inventor: Takami, Shinya, Tokyo, 140-0002 (JP)
(74) Representative: Hoffmann Eitle

(57) **Abstract**

A search device (200) correlates and records keywords representing products or the like, the degrees of importance of the keywords, and the locations of Web pages in which the products or the like are described. Upon receiving information indicating that a user intends to purchase: a first product or the like described on a Web page present at the searched location on the basis of a search query, which is a keyword designated by the user, and the degree of importance of the keyword; and a second product or the like described on a another Web page, the search device (200) correlates the location of the Web page in which the second item or similar item is described, the designated search query, and the degree of importance calculated by a prescribed statistical process.

## Description

### Technical Field

The present invention relates to a search device, a search program, a computer-readable recording medium in which a search program is recorded, and a search method.

### Background Art

An information provision method including a step for searching advertisement information correlated to keywords received through a client terminal, from multiple pieces of advertisement information recorded in a memory correlated to keywords (hereafter called "search queries") and a step for returning the advertisement information searched, has been known from before (for example, see Patent Literature 1).

### Citation List

### Patent Literature

Patent Literature 1: Unexamined Japanese Patent Application Kokai Publication No. 2007-219595.

### Summary of Invention

### Technical Problem

In the art of Patent Literature 1, for example keywords described in advertisement information such as a Web page and the like are correlated to that Web page. Consequently, in the art of Patent Literature 1, the problem arises that it is difficult to correlate keywords to a Web page not directly derived from that Web page.

In consideration of the foregoing, it is an objective of the present invention to provide a search device, a search program, a computer-readable recording medium in which a search program is recorded, and a search method, with which it is possible to correlate keywords not directly derived from a Web page in which products or services are described to that Web page.

### Solution to Problem

In order to achieve the above-described objective, the search device according to a first aspect of the present invention comprises:
a memory device for correlating and storing keywords describing a product or service, the degrees of importance of those keywords and the locations of Web pages in which the products or services are described;
a searching part for searching the location of the Web page from the storage device based on a search query that is a keyword designated by a user and the degree of importance correlated to that keyword;
an exhibiting part for exhibiting to the user a search result designating the location of the searched Web pages; and
an updating part for updating the memory device, when information indicating that the user has an intent to purchase a first product or first service described in a Web page at the searched location and a second product or second service described in a Web page different from the Web page at the searched location before a prescribed period elapses from when the search query was designated by the user, by setting the designated search query as a keyword describing the second product or the second service, and by correlating and storing that keyword, the degree of importance of that keyword calculated by a prescribed statistical process and the location of a Web page in which the second product or the second service is described.

In addition, in the search device according to the first aspect, it would be fine if:
in the Web pages stored in the memory device, locations of related pages related to those Web pages are included;
the memory device further correlates and stores the locations of related pages related to those Web pages to the locations of those Web pages; and
the updating part is such that when a Web page viewed by the user using the locations of related Web pages included in the Web page at the searched location is a Web page in which the second product or second service which the user has shown the intent to purchase is described, the updating part correlates the location of that Web page to the designated search query.

In addition, in the search device according to the first aspect, it would be fine if the updating part makes, as a search result, the result of sorting the locations of Web pages searched based on the search query in accordance with the degrees of importance stored by the memory device correlated to those locations.

In addition, in the search device according to the first aspect, it would be fine if the updating part updates the degree of importance stored in the memory device correlated to the designated search query and the acquired location of Web page on the basis of one or more out of the amount paid through settlement of a bill including the purchase bill of the first product or the first service and the second product or the second service, the number of products or services purchased through the settlement, the number of types of products or services purchased through the settlement and the conversion ratio of the Web page in which the second product or the second service is described.

In addition, in the search device according to the first aspect, it would be fine if the updating part updates the degree of importance stored in the memory device correlated to the designated search query and the acquired location of the Web page on the basis of the number of Web pages viewed by the user or the time needed from when the search query was designated by the user until the Web page in which the second product which the user has shown the intent to purchase is described is viewed.

Furthermore, in the search device according to the first aspect, it would be fine if:
the memory device correlates and stores the keyword, the degree of importance of that keyword calculated by the prescribed statistical process and the location of Web page in which the second product or the second service is described, for each attribute of the user; and
the searching part sets as the search result the result of sorting the locations of the Web pages searched on the basis of the search query in accordance with the degrees of importance stored by the memory device correlated to those locations and the attribute of the user.

In order to achieve the above-described objective, a search program according to a second aspect of the present invention causes a computer to function as:
a memory device for correlating and storing keywords describing a product or service, the degrees of importance of those keywords and the locations of Web pages in which the products or services are described;
a searching part for searching the location of the Web pages from the storage device based on a search query that is a keyword designated by a user and the degree of importance correlated to that keyword;
an exhibiting part for exhibiting to the user a search results designating the location of the searched Web pages; and
an updating part such that when information indicating that the user has an intent to purchase a first product or first service described in a Web page at the searched location and a second product or second service described in a Web page different from the Web page at the searched location before a prescribed period elapses from when the search query was designated by the user, the updating part sets the designated search query as a keyword describing the second product or the second service and updates the memory device by correlating and storing that keyword, the degree of importance of that keyword calculated by a prescribed statistical process and the location of a Web page in which the second product or the second service is described.

In order to achieve the above-described objective, a search program recorded in a computer-readable recording medium according to a third aspect of the present invention causes a computer to function as:
a memory device for correlating and storing keywords describing a product or service, the degrees of importance of those keywords and the locations of Web pages in which the products or services are described;
a searching part for searching the location of the Web pages from the storage device based on a search query that is a keyword designated by a user and the degree of importance correlated to that keyword;
an exhibiting part for exhibiting to the user a search results designating the location of the searched Web pages; and
an updating part such that when information indicating that the user has an intent to purchase a first product or first service described in a Web page at the searched location and a second product or second service described in a Web page different from the Web page at the searched location before a prescribed period elapses from when the search query was designated by the user, the updating part sets the designated search query as a keyword describing the second product or the second service and updates the memory device by correlating and storing that keyword, the degree of importance of that keyword calculated by a prescribed statistical process and the location of a Web page in which the second product or the second service is described.

In order to achieve the above-described objective, a search method according to a fourth aspect of the present invention including:
a searching step in which, from a memory device for correlating and storing keywords describing a product or service, the degrees of importance of those keywords and the locations of Web pages in which the products or services are described, the location of the Web pages from the storage device based on a search query that is a keyword designated by a user and the degree of importance correlated to that keyword is searched;
an exhibition step in which a search results designating the location of the searched Web pages is exhibited to the user; and
an updating step in which the memory device is updated, when information indicating that the user has an intent to purchase a first product or first service described in a Web page at the searched location and a second product or second service described in a Web page different from the Web page at the searched location before a prescribed period elapses from when the search query was designated by the user, by setting the designated search query as a keyword describing the second product or the second service, and by correlating and storing that keyword, the degree of importance of that keyword calculated by a prescribed statistical process and the location of a Web page in which the second product or the second service is described.

### Advantageous Effects of Invention

With the search device, search program, computer-readable recording medium in which a search program is recorded and search method according to the present invention, it is possible to correlate keywords not derived from a Web page in which products or services are described to that Web page.

### Brief Description of Drawings

FIG. 1 is a system composition drawing showing an exemplary composition of a search system comprising a search device according to a preferred embodiment of the present invention;
FIG. 2 is a hardware composition drawing showing an exemplary composition of a search device according to a preferred embodiment of the present invention;
FIG. 3 is a flowchart showing one example of a product or the like sales process executed by the search device;
FIG. 4 is a function block diagram showing one example of functions exhibited by the search device;
FIG. 5 is a drawing for explaining the genre structure of products or the like sold by the search system;
FIG. 6 is a drawing showing one example of a genre table stored by the search device;
FIG. 7 is a drawing showing one example of a genre hierarchy table stored by the search device;
FIG. 8 is a drawing showing one example of a table of products or the like stored by the search device;
FIG. 9A is a drawing showing one part of one example of a keyword table for products or the like stored by the search device;

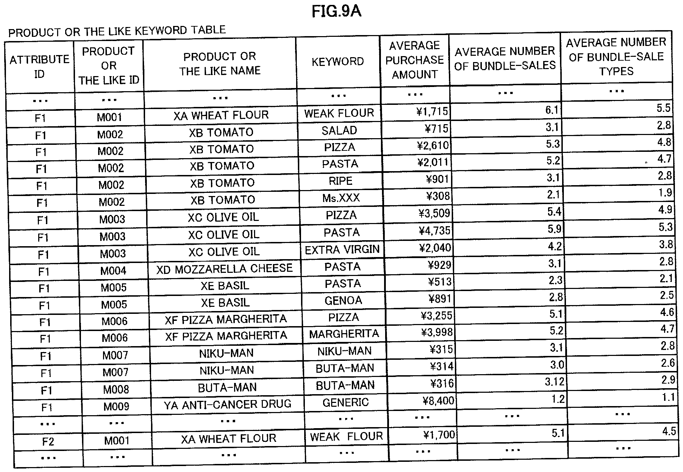

FIG. 9A is a drawing showing another part of the example of a keyword table for products or the like stored by the search device;

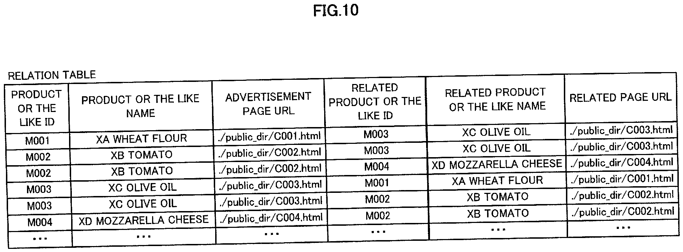

FIG. 10 is a drawing showing one example of a relation table stored by the search device;

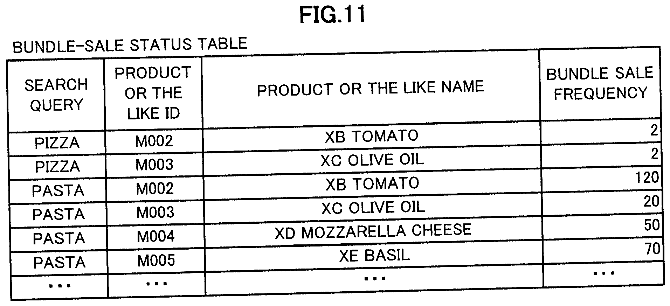

FIG. 11 is a drawing showing one example of a bundled-sales status table stored by the search device;

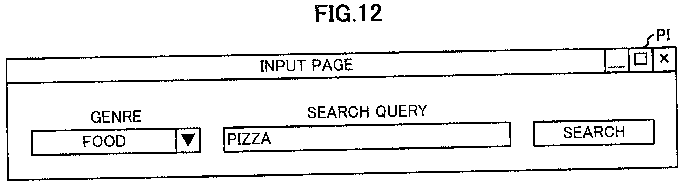

FIG. 12 is a drawing showing one example of an input page displayed by a terminal device;

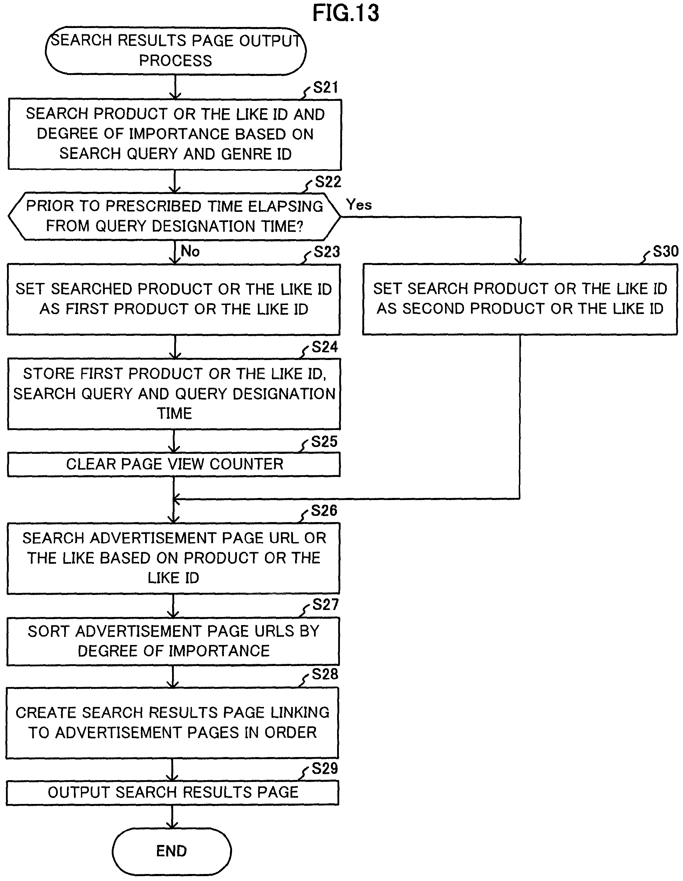

FIG. 13 is a flowchart showing one example of a search results page output process executed by the search device;

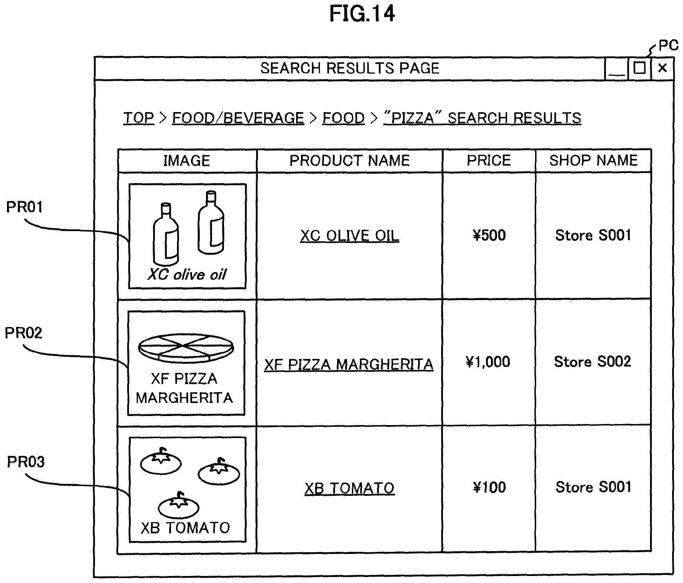

FIG. 14 is drawing showing one example of a search results page displayed by the terminal device;

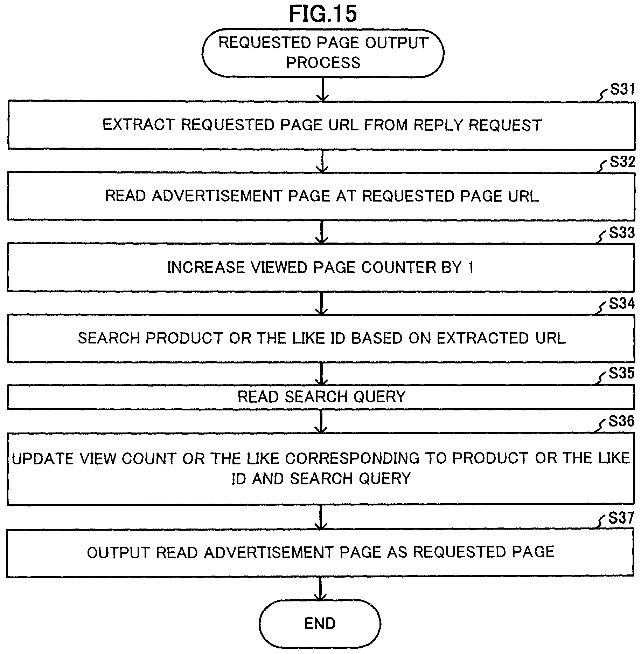

FIG. 15 is a flowchart showing one example of a requested page output process executed by the search device;

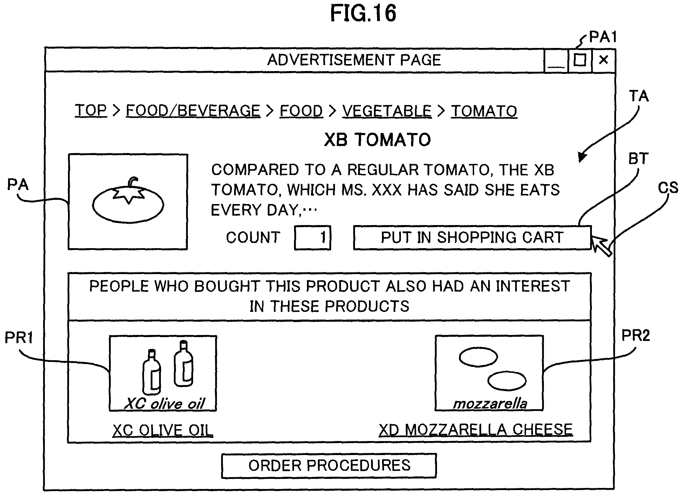

FIG. 16 is a drawing showing one example of an advertisement page displayed by the terminal device;

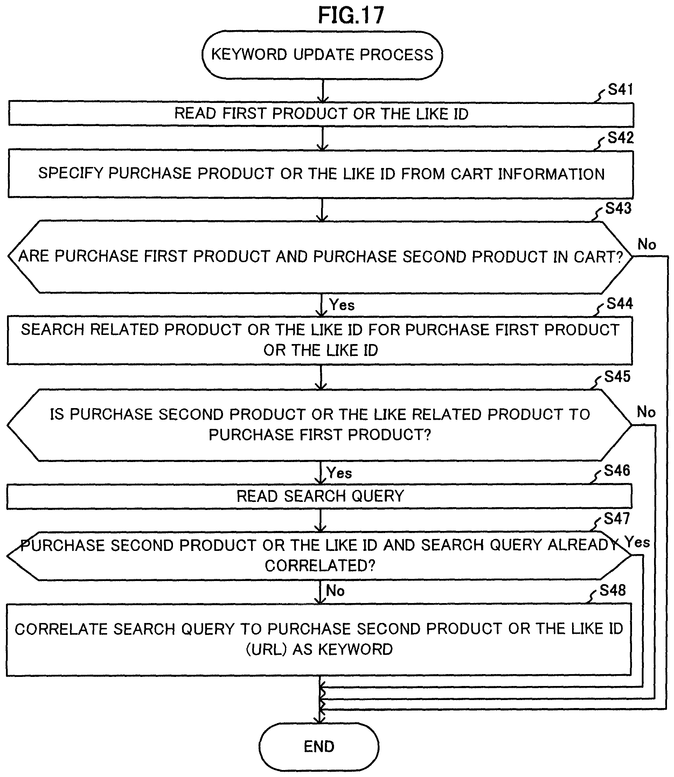

FIG. 17 is a flowchart showing one example of a keyword update process executed by the search device;

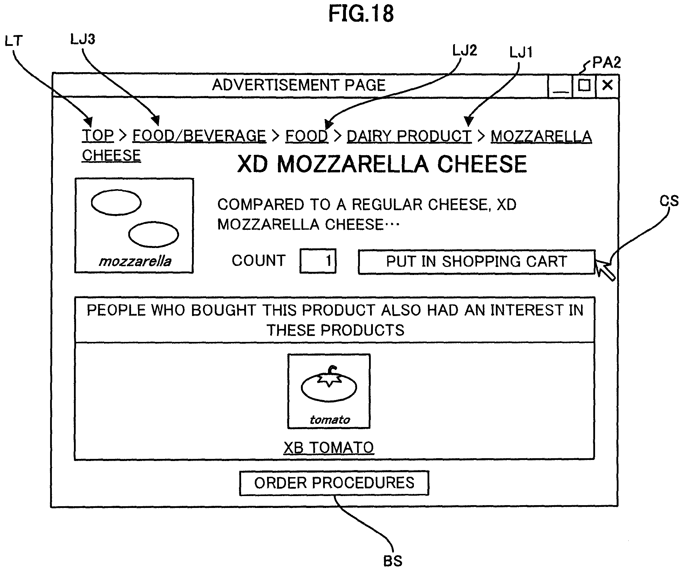

FIG. 18 is a drawing showing another example of an advertisement page displayed by the terminal device;

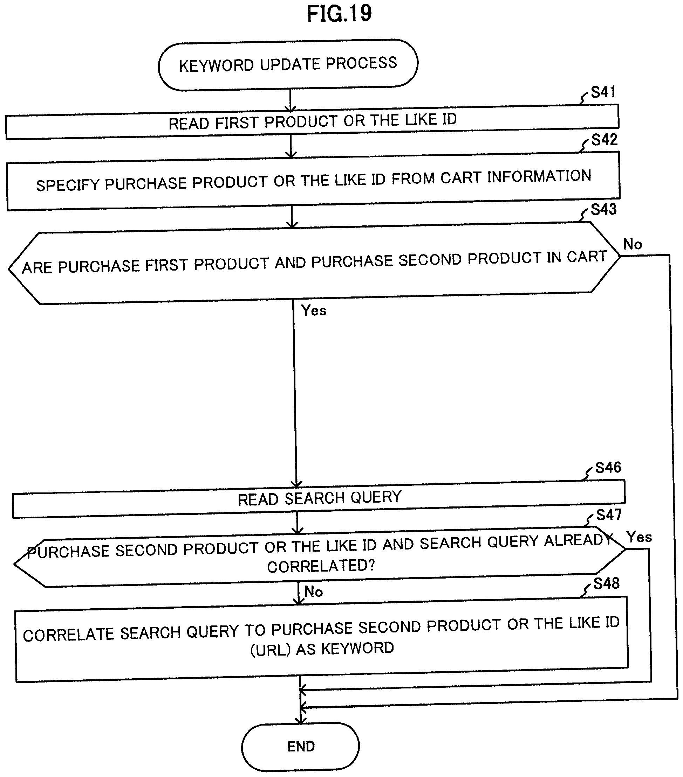

FIG. 19 is a flowchart showing another example of the keyword update process executed by the search device;

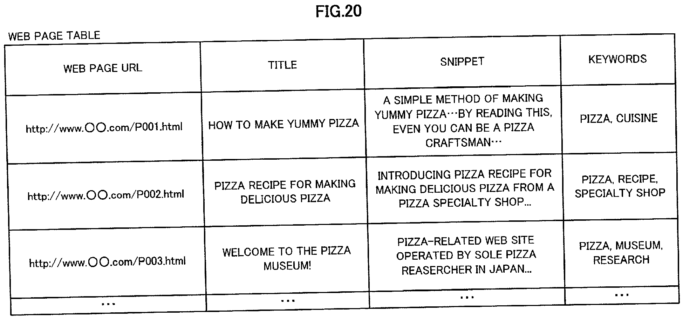

FIG. 20 is a drawing showing one example of a Web page table stored by the search device;

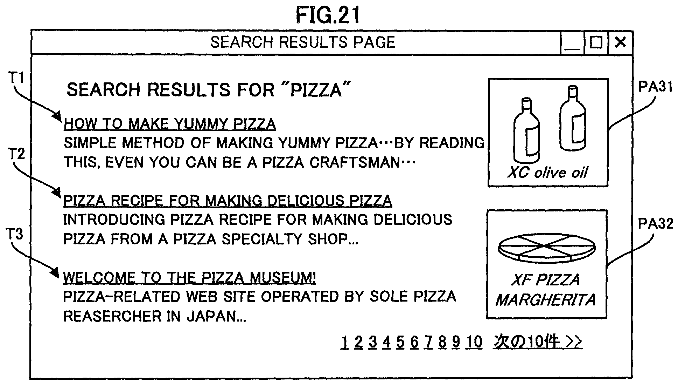

FIG. 21 is a drawing showing another example of a search results page displayed by the terminal device; and

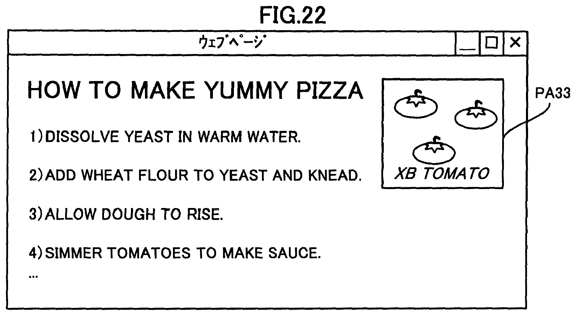

FIG. 22 is a drawing showing one example of a Web page displayed by the terminal device.

### Description of Embodiments

Below, the preferred embodiments of the present invention are described with reference to the attached drawings.

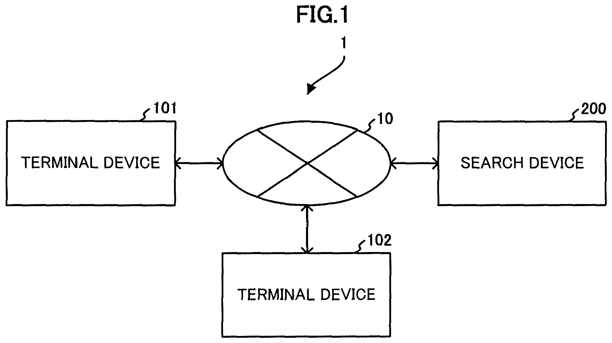

A search device 20 according to a preferred embodiment of the present invention comprises a search system such as the one shown in FIG. 1. The search system of FIG. 1 comprises, besides the search device 200, a computer communication network 10 (hereafter referred to simply as the communication network 10), and terminal devices 101 and 102.

The communication network 10 comprises the Internet, for example. It would also be fine for the communication network 10 to comprise a LAN (Local Area Network) or a public circuit network.

The terminal device 101 and the terminal device 102 each have the same composition, so only the terminal device 101 will be described. The terminal device 101 comprises a personal computer provided with a display device such as an LCD (Liquid Crystal Display) or the like, and input devices such as a keyboard, a mouse or the like.

The terminal device 101 is such that the input device is operated by a user and a search query constituting keywords designated by the user is input. In this preferred embodiment, the explanation will be for a case where the user inputs keywords describing products or services (hereafter, products or the like) as a search query, but this is intended to be illustrative and not limiting. In addition, the services provided in this preferred embodiment are explained as including video distribution services over the Internet, but this is intended to be illustrative and not limiting.

Upon a search query being input, the terminal device 101 sends the input search query to the search device 200. Following this, the terminal device 101 receives a Web page returned by the search device 200 in response to the search query sent, and displays on the display device this received Web page.

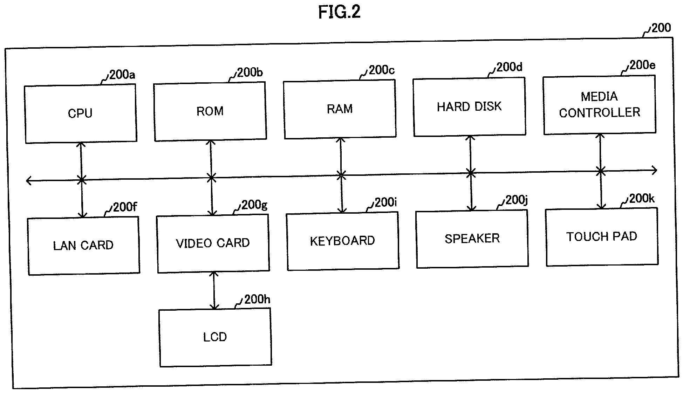

The search device 200 comprises a server device such as the one shown in FIG. 2. The search device 200 comprises a CPU (Central Processing Unit) 200a, ROM (Read Only Memory) 200b, RAM (Random Access Memory) 200c, a hard disk 200d, a media controller 200e, a LAN card (Local Area Network) 200f, a video card 200g, an LCD (Liquid Crystal Display 200h), a keyboard 200i, a speaker 200j and a touch pad 200k.

The CPU 200a executes software processes in accordance with programs stored on the ROM 200b or the hard disk 200d and through this accomplishes total control of the search device 200. The RAM 200c temporarily stores data that are processing targets when a program is executed by the CPU 200a.

The hard disk 200d is an information storage device for storing tables in which various types of data are stored. It would be fine for the search device 200 to be provided with flash memory in place of the hard disk 200d.

The media controller 200e reads out various types of data and programs from recording media including flash memory, CD (Compact Disc), DVD (Digital Versatile Disc) and Blu-ray Disc (registered trademark).

The LAN card 200f sends data to and receives data from the terminal devices 101 and 102 connected via the communications network 10. The keyboard 200i and the touch pad 200k input signals and information in accordance with user operation. The LAN card 200f comprises an acquiring part and an exhibiting part.

The video card 200g renders images based on digital signals output from the CPU 200a and also outputs image signals showing rendered images. The LCD 200h displays images in accordance with the image signals output from the video card 200g. It would be fine for the search device 200 to be provided with a PDP (Plasma Display Panel) or EL (Electroluminescence) display in place of the LCD 200h. The speaker 200j outputs audio based on signals output from the CPU 200a.

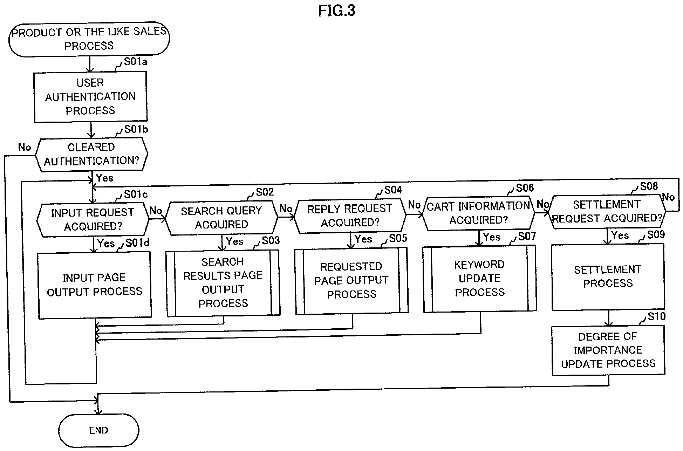

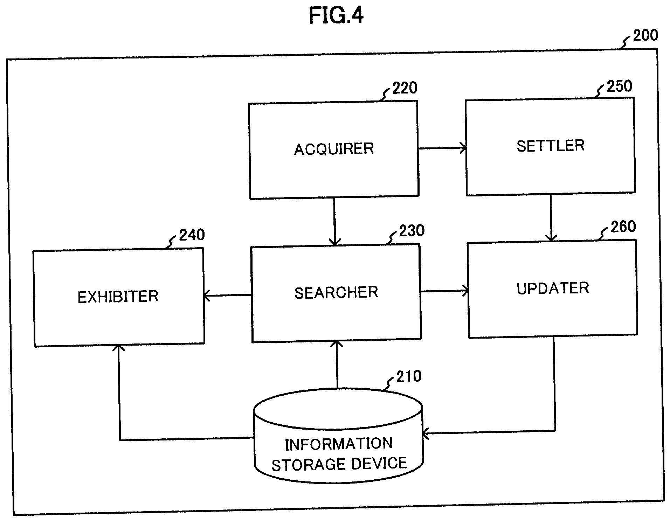

The CPU 200a of the search device 200 executes a product or the like sales process such as the one shown in FIG. 3 selling or providing (hereafter referred to as selling or the like) products or the like on the Internet, using the hardware of FIG. 2. Through this, the CPU 200a functions as a searching part 230, a settling part 250 and an updating part 260 as shown in FIG. 4. In addition, the CPU 200a, in cooperation with the hard disk 200d, functions as an information storage device 210. Furthermore, the CPU 200a, in cooperation with the LAN card 200f, functions as an acquiring part 220 and an exhibiting part 240.

Before the product or the like sales process of FIG. 3 is described, the products or the like sold or the like by execution of this process are described.

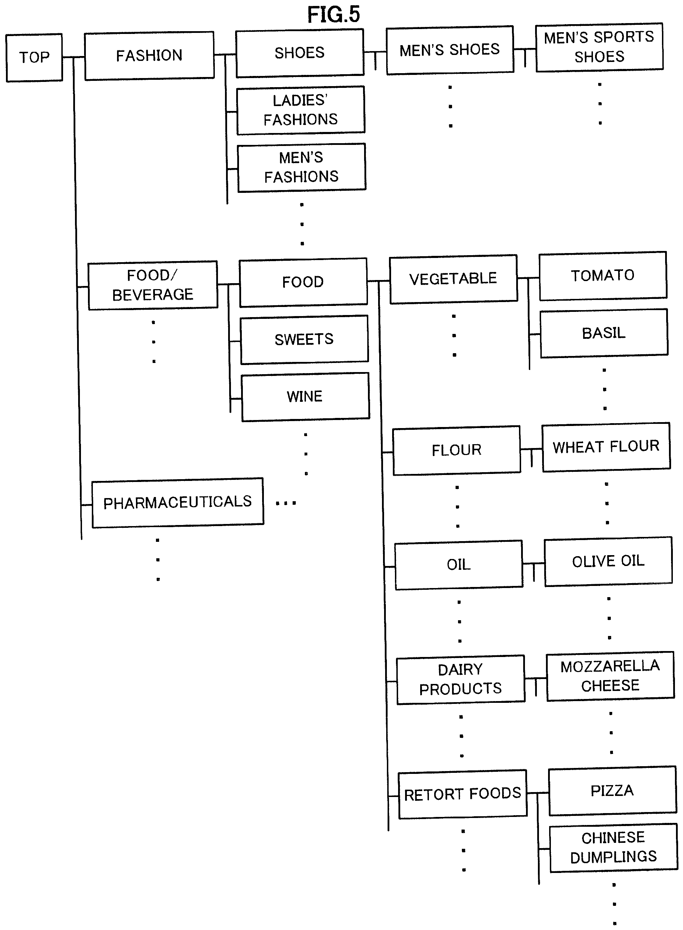

In this preferred embodiment, the products or the like sold or the like by execution of this process are explained as sold or the like in an electronic store (that is to say, an online shop) or an auction site set up on the Internet. These products or the like are classified in multiple types (that is to say, genres) such as those shown in FIG. 5, and the multiple genres respectively have a hierarchical structure.

Specifically, the products or the like are classified into a "fashion" genre, a "food/beverage" genre, a "pharmaceutical" genre, or other genres not depicted in the drawing. In the "fashion" genre, products such as apparel are classified; in the "food/beverage" genre, products such as food or beverages are classified; and in the "pharmaceutical" genre, products such as pharmaceuticals are classified.

In addition, products classified in the "fashion" genre are classified in the "shoe" genre, the "ladies' fashion" genre, the "men's fashion" genre or other genres undepicted in the drawing. Shoes are classified in the "shoe" genre, women's apparel is classified in the "ladies' fashion" genre, and men's apparel is classified in the "men's fashion" genre. Furthermore, products classified in the "shoe" genre are classified in a "men's shoes" genre in which men's shoes are classified, or in multiple other undepicted genres. Products classified in the "men's shoes" genre are classified in the "men's sports shoes" genre in which exercise shoes are classified, or in multiple other undepicted genres.

Consequently, the genre "fashion," the genre "food/beverages," and the genre "pharmaceuticals" comprise the same level. In addition, the genre "shoes," the genre "ladies' fashion" and the genre "men's fashion" comprise lower levels than that level.

Similarly, products or the like classified in the genre "food/beverage" are classified in a genre "food," a genre "sweets", a genre "wine" or in multiple other undepicted genres. Food is classified in the "food" genre, Western confections, Japanese confections, fruit and the like are classified in the "sweets" genre, and wine is classified in the "wine" genre.

Furthermore, products classified in the "food" genre are classified in a "vegetable" genre, a "flour" genre, "an "oil" genre, a "dairy products" genre, a "retort foods" genre or multiple other undepicted genres. Vegetables are classified in the "vegetable" genre and grains processed into flours are classified in the "flour" genre. In addition, oils are classified in the "oil" genre, dairy products are classified in the "dairy products" genre, and retort foods are classified in the "retort foods" genre.

In addition, products classified in the "vegetable" genre are classified in the "tomato" genre in which tomatoes are classified, the "basil" genre in which basil is classified, or multiple other undepicted genres.

Similarly, products classified in the "flour" genre are classified in the "wheat flour" genre in which wheat flour is classified, or multiple other undepicted genres. Products in the "oils" genre are classified in the "olive oil" genre in which olive oil is classified, or multiple other undepicted genres. Furthermore, products classified in the "dairy products" genre are classified in the "mozzarella cheese" genre in which mozzarella cheese is classified, or multiple other undepicted genres. Products classified in the "retort foods" genre are classified in the "pizza" genre in which frozen pizza is classified, or in the "Chinese dumpling" genre in which frozen Chinese dumplings are classified, or multiple other undepicted genres. Each of these genres forms a hierarchical structure such as that shown in FIG. 5.

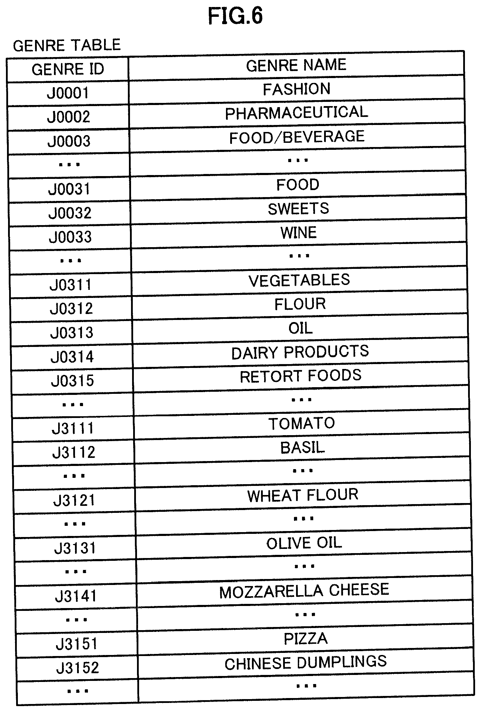

Consequently, the information storage device 210 stores a genre table such as that shown in FIG. 6. In this genre table, information in which information identifying the genres shown in FIG. 5 (hereafter, called the genre ID) and information indicating the name of that genre (hereafter called the genre name) are correlated is stored.

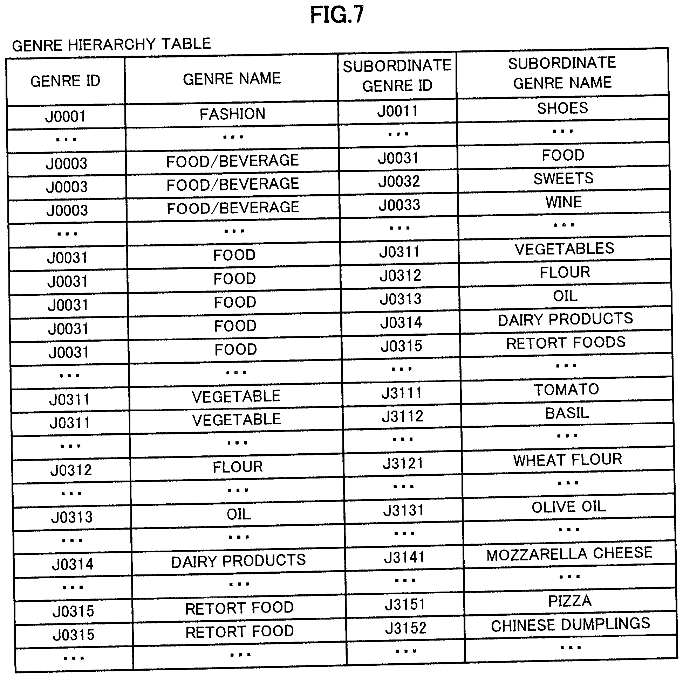

In addition, the information storage device 210 stores a genre hierarchy table such as the one shown in FIG. 7. In the genre hierarchy table, information in which the genre ID stored in the genre table of FIG. 6, genre name information, subordinate genre ID and information indicating subordinate genre names are correlated is stored.

The genre name information correlated to genre ID is information indicating the genre name of the genre identified with that genre ID. In addition, the subordinate genre ID correlated to the genre ID is a genre ID of a genre (hereafter called a subordinate genre) comprising immediately subordinate layers to the genre identified with that genre ID. Furthermore, the subordinate genre name states the name of the subordinate genre, and the information indicating the subordinate genre name correlated to the subordinate genre ID is information indicating the name of the subordinate genre identified with that subordinate genre ID.

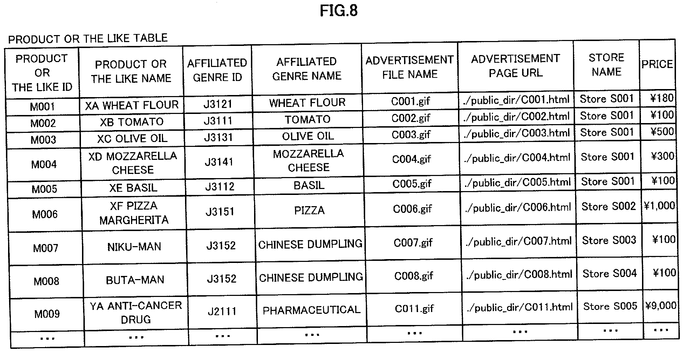

Furthermore, the information storage device 210 stores a product or the like table such as the one shown in FIG. 8. In the product or the like table, information in which information identifying a product or the like (hereafter called the product or the like ID), information indicating a product or the like name, an affiliated genre ID, information indicating an affiliated genre name, information indicating an advertisement file name, information indicating an advertisement page URL, information indicating a store name, and information indicating a price for the product or the like are correlated is stored.

The product or the like name tells the name of the product or the like, and the information indicating the product or the like name correlated to the product or the like ID is information indicating the product or the like name identified with that product or the like ID. In addition, the affiliated genre ID correlated to the product or the like is a genre ID for the lowest level of genre (hereafter called the affiliated genre) to which the product or the like identified with the product or the like ID belongs. The affiliated genre name tells the name of the affiliated genre, and the information indicating the affiliated genre name correlated to the affiliated genre ID is information indicating the name of the affiliated genre identified with that affiliated genre ID.

The advertisement file name is the name of an image file indicating advertisements for the product or the like, and the information indicating the advertisement file name correlated to the product or the like ID is information indicating the name of the image file indicating advertisements for the product or the like identified with that product or the like ID. The advertisement page URL is the URL of an advertisement page for the product or the like, and the information indicating the advertisement page URL correlated to the product or the like ID is information indicating the URL of an advertisement page for the product or the like identified with that product or the like ID. The store name is the name of a store, and the information indicating the store name correlated to the product or the like ID is information indicating the name of a store where the product or the like identified with that product or the like ID is sold or the like.

In addition, the information storage device 210 correlates and stores a user ID identifying a user using the search system 1, information indicating a password set by that user and an attribute ID identifying an attribute which that user has.

The attribute which the user has is explained for example as a C layer, T layer, F1 layer, F2 layer, F3 layer, M1 layer, M2 layer and M3 layer, but this is intended to be illustrative and not limiting. The C layer means the layer to which male and female users from age 4 through age 12 belong, and the T layer means the layer to which male and female users from age 13 through age 19 belong. In addition, the F1 layer means the layer to which female users from age 20 through age 34 belong, the F2 layer means the layer to which female users from age 35 through age 49 belong and the F3 layer means the layer to which female users age 50 or older belong. Similarly, the M1 layer means the layer to which male users from age 20 through age 34 belong, the M2 layer means the layer to which male users from age 35 through age 49 belong and the M3 layer means the layer to which male users age 50 or older belong. The attribute IDs of the C layer, the T layer, the F1 layer, the F2 layer, the F3 layer, the M1 layer, the M2 layer and the M3 layer will be described as "C", "T", "M1", "M2", "M3", "C1", "C2" and "C3", respectively.

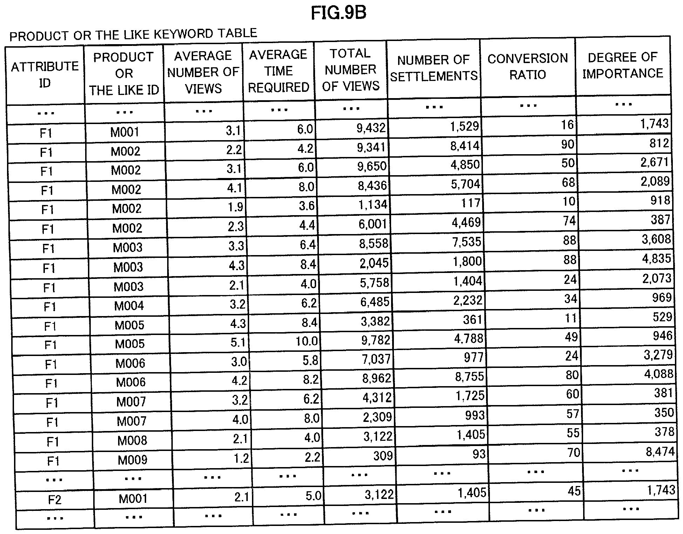

Furthermore, the information storage device 210 stores a product or the like keyword table such as the one shown in FIG. 9A and 9B. The product or the like keyword table correlates and stores attribute ID, product or the like ID, information indicating product or the like name and information indicating keyword.

The attribute ID means information identifying the attribute of the user. The product or the like ID correlated to the attribute ID is information identifying a product or the like purchased by the user identified with that attribute ID. In addition, the information indicating product or the like name correlated to the product or the like ID is information indicating the product or the like name of the product or the like identified with that product or the like ID. Furthermore, the information indicating keyword correlated to the product or the like ID is information indicating a keyword describing the product or the like identified with that product or the like ID.

In addition, in the product or the like keyword table, information indicating attribute ID, product or the like ID and average purchase amount, information indicating average number of bundle sales, information indicating average number of bundle-sale types, information indicating average number of views, information indicating average time required, information indicating total number of views, information indicating number of settlements and information indicating conversion ratio are correlated and stored.

The average purchase amount means average settlement amount. The information indicating the average purchase amount correlated to the attribute ID and product or the like ID is information indicating the average settlement amount paid by the user has the attribute identified with that attribute ID, in the purchase of the product or the like identified with that product or the like ID.

The average number of bundle sales means the average number of products or the like sold or the like to a user in a bundle with a given product or the like (hereafter called bundle-sold or the like). The information indicating average number of bundle sales correlated to the attribute ID and the product or the like ID is information indicating the average number of bundle sales of the product or the like bundle-sold or the like to a user has the attribute identified with that attribute ID in a bundle with the product or the like identified with that product or the like ID.

The average number of bundle-sale types means the average number of types of products or the like bundle-sold or the like. The information indicating the average number of bundle-sale types correlated to the attribute ID and the product or the like ID is information indicating the average number of types of products or the like bundle-sold or the like to a user has the attribute identified with that attribute ID in a bundle with the product or the like identified with that product or the like ID.

The information indicating the average number of views correlated to an attribute ID and a product or the like ID is information indicating the average number of Web pages viewed by a user has the attribute identified with that attribute ID from the time a search query was designated (hereafter called the query designation time) until an advertisement page of the product or the like identified with that product or the like ID was viewed.

The information indicating average time required correlated to an attribute ID and a product or the like ID is information indicating the average time required from a query designation time until an advertisement page of the product or the like identified with that product or the like ID was viewed by a user has the attribute identified with that attribute ID.

The information indicating total number of views correlated to an attribute ID and a product or the like ID is information indicating the total number of times an advertisement page of the product or the like identified with that product or the like ID was viewed by a user has the attribute identified with that attribute ID.

The information indicating number of settlements correlated to an attribute ID and a product or the like ID is information indicating the number of times the product or the like identified with that product or the like ID was purchased and payment made by a user has to the attribute identified with that attribute ID.

Conversion rate means the number of times a user purchased a given product or the like as a percentage of the number of times that user viewed an advertisement page of that product or the like. The information indicating the conversion ratio correlated to an attribute ID and a product or the like ID is information indicating the number of times a user has the attribute identified with that attribute ID purchased the product or the like identified with that product or the like ID, as a percentage of the number of times that user viewed an advertisement page for that product or the like.

In addition, in the product or the like keyword table, the attribute ID, product or the like ID and keyword and information indicating degree of importance are correlated and stored.

Degree of importance is an indicator indicating to what extent a user searching for a given product or the like based on a given keyword contributes to sales of a store selling that product or the like. The information indicating the degree of importance correlated to information indicating an attribute ID, a product or the like ID and a keyword is information indicating the degree of importance indicating the extent to which a search for the product or the like identified with that product or the like ID by a user has the attribute identified with that attribute ID based on that keyword contributes to sales of a store selling that product or the like.

In the product or the like keyword table of FIG. 9A and 9B, information indicating keyword correlated to a product or the like ID includes information indicating a keyword extracted from a character string expressed in an advertisement image (that is to say, extracted from advertising content) indicating an advertisement for the product or the like identified with that product or the like ID, or information indicating a keyword selected by a vendor selling the product or the like identified with that product or the like ID.

Furthermore, the information storage device 210 stores a relation table such as the one shown in FIG. 10. In this relation table, a product or the like ID identifying a product or the like, information indicating the product or the like name of that product or the like, and information indicating the URL of an advertisement page for that product or the like are correlated. In addition, in the relation table, information correlating a product or the like ID, information indicating the URL of an advertisement page, a related product or the like ID, information indicating a related product or the like name and information indicating a related page URL are stored.

A related product or the like ID means a product or the like ID for a related product or the like, and a related product or the like name means the name of a related product or the like. A related product or the like means a product or the like advertised with an advertisement page (hereafter called a related page to that advertisement page) related to an advertisement page of a given product or the like. It would be fine to establish the relation of a given advertisement page to another advertisement page by posting a link to the other advertisement page on that given advertisement page, for example.

The related product or the like ID correlated to a product or the like ID and information indicating the URL of an advertisement page is a product or the like ID for a related product or the like advertised on a related page related to that advertisement page of the product or the like identified with that product or the like ID. Similarly, the related product or the like name correlated to a product or the like ID and information indicating the URL of an advertisement page is the name of a related product or the like advertised on a related page related to that advertisement page of the product or the like identified with that product or the like ID.

Furthermore, the information storage device 210 stores a bundled sale status table such as the one shown in FIG. 11. In the bundled sale status table, information correlating information indicating a search query used in order to search Web pages of a bundle-sold product or the like, the product or the like ID of that product or the like, information indicating the product or the like name of that product or the like, and information indicating the number of times that product or the like is bundle-sold with another product or the like (hereafter called the bundle sales frequency) is stored.

Next, the product or the like sales process executed using the above-described data is explained.

When information indicating a user ID and password, and an input request seeking for the return of an input page used in inputting a search query, are received by the LAN card 200f of FIG. 2 from the terminal device 1010 of FIG. 1, the CPU 200a starts execution of the product or the like sales process shown in FIG 3. Below, an explanation is given supposing that the terminal device 101 sends a user ID "U001" to the search device 200.

When execution of the product or the like sales process begins, the acquiring part 220 of FIG. 4 acquires the user ID "U001" and a password from the LAN card 200f. Following this, the acquiring part 220 searches for an attribute ID "F1" and information indicating a password correlated to that user ID "U001" from the information storage device 210 of FIG. 4.

Following this, the acquiring part 220 executes a user authentication process authenticating the user based on whether or not the information indicating the acquired password and the information indicating the searched password match (step S01a). Next, when it is determined that the user does not clear authentication because the information indicating the acquired password and the information indicating the search password differ (step S01b: No), the acquiring part 220 ends execution of the product or the like sales process.

In contrast, when it is determined that the user has cleared authentication because the information indicating the acquired password and the information indicating the search password match (step S01b: Yes), the acquiring part 220 acquires an input request from the LAN card 200f.

Following this, the acquiring part 220 determines that an input request has been acquired from the terminal device 101 (step S01c: Yes), and the exhibiting part 240 of FIG. 4 then executes an input page output process (step S01d). The input page output process is a process in which information indicating an input page PI used in input of a search query such as the one shown in FIG. 12 is acquired from the information storage device 210 and the acquired information is output to the LAN card 200f of FIG. 2. The LAN card 200f returns information indicating the output input page PI to the terminal device 101.

Upon receiving the information indicating the input page PI, the terminal device 101 displays on the display device the input page PI indicated by the information received. Next, the terminal device 101 is operated by a user who has visually confirmed the input page PI. The terminal device 101, though this operation, inputs by the input device a search query designated by that user and a genre ID for the genre designated as the genre to which the product or the like searched for by that query belongs. Following this, the terminal device 101 returns the input search query and genre ID to the search device 200.

In this preferred embodiment, the explanation cites an example of the case when the search query "pizza" is input and the genre ID "J0031" identifying the genre of "food" are input, but this is intended to be illustrative and not limiting of the genre ID and search query input.

After step SOld in FIG. 3, the LAN card 200f of the search device 200 shown in FIG. 2 receives from the terminal device 101 the search query "pizza" and the genre ID "J0031." Following this, the acquiring part 220 of FIG. 4 acquires this search query and genre ID from the LAN card 200f.

Following this, the acquiring part 220 determines that an input request from the terminal device 101 has not been acquired (step S01c in FIG. 3: No) but a search query has been acquired (step S02: Yes). Next, the acquiring part 220 acquires a system time managed by an OS (Operating System), for example, and sets the acquired time as the query designation time when the search query was designated. Following this, a search result page output process such as the one shown in FIG. 13 is executed (step S303).

When the search result page output process of FIG. 13 is started, the searching part 230 of FIG. 4 searches subordinate genre IDs from "J0311" to "J0315" correlated to the acquired genre ID "J0031", from the genre hierarchy table of FIG. 7. Next, the searching part 230 acquires subordinate genre IDs "J3111", "J3112", "J3121", "J3131", "J3141", "J3151" and "J3152" respectively correlated to the same genre IDs as the searched subordinate genre IDs "J0311" to "J0315" (that is to say, the genre IDs of genres comprising the closest subordinate layer to the subordinate genres).

Next, the searching part 230 searches within the product or the like table of FIG. 8 product or the like IDs correlated to the same affiliated genre ID as any of the acquired genre ID "J0031", the searched subordinate genre IDs "J0311" to "J0315" and "J3111", "J3112", "J3121", "J3131", "J3141", "J3151" and "J3152". Through this, the searching part 230 acquires product IDs "M001" through "M008".

Following this, the searching part 230 searches for the product or the like IDs "M002", "M003" and "M006" correlated to the attribute ID "U001" and the same keyword as the acquired search query "pizza" within the acquired product IDs "M001" through "M008", within the product or the like keyword table of FIG. 9A and 9B. Next, the searching part 230 searches the degree of importance correlated to the searched product or the like IDs "M002", "M003" and "M006" (step S21 in FIG. 13).

Next, the searching part 230 reads out information indicating a query designation time stored in the information storage device 110 in below-described step S24, after acquiring the system time from the OS. However, the process in step S24 has not yet been executed, so the information indicating the query designation time is not stored in the information storage device 110. Consequently, the searching part 230 cannot read out information indicating the query designation time, so it is determined that it is prior to a prescribed time elapsing from the query designation time (step S22: No).

Following this, the searching part 230 sets the product or the like IDs "M002", "M003" and "M006" searched in step S21 as the first product or the like IDs, and sets the products or the like identified with the searched product or the like IDs as the first products or the like (step S23).

Next, information indicating the search query, information indicating the query designation time and the first product or the like IDs of the first products or the like searched based on that search query are correlated and stored in the information storage device 210 (step S24).

Following this, the searching part 230 initializes (that is to say, clears) as the value "0" the value of the viewed page counter from when the first product or the like was searched until the purchase price of multiple products or the like including the first products or the like is settled (step S25). The viewed page counter is a variable that counts the total number of Web pages viewed by the user of the terminal device 101.

Next, the searching part 230 searches information indicating the advertisement file name advertising the products or the like identified with those IDs, information indicating the advertisement page URL and information indicating the products or the like names, based on the product or the like IDs (that is to say the first products or the like ID) "M002", "M003" and "M006" searched for in step S21 (step S26). Through this process, the searching part 230 acquires information indicating the product or the like name "XB tomato", information indicating "XC olive oil" and information indicating "XF margherita pizza."

Following this, the searching part 230 sorts the information indicating product or the like name searched for in step S26, the information indicating advertisement page URL and the information indicating advertisement file name in order of degree of importance indicated by the information retrieved in step S21 (that is to say, in descending order) (step S27). It would be fine for the searching part 230 to sort the information searched in step S26 in order from the lowest degree of importance (that is to say, in ascending order).

Next, the exhibiting part 240 creates a search results page PC such as the one shown in FIG. 14 (step S28). This search results page PC lists advertisement images PR01 through PR03 indicated by the electronic files of advertising file names indicated by the information sorted in step S27. In addition, the search results page PC lists the advertisement images PR01 through PR03 so as to be arranged from the top side of that page in order from the advertisement image corresponding to the highest degree of importance. In addition, advertisement pages advertising the products or the like advertised by those advertisement images are linked to the listed advertisement images.

Following this, the exhibiting part 240 outputs information indicating the search results page PC created to the LAN card 200f of FIG. 2 (step S29), and then execution of the search results page output process concludes. The LAN card 200f returns the output information to the terminal device 101 and the terminal device 101 displays the search results page PC indicated by the received information on the display device.

The user of the terminal device 101 visually confirms the search results page PC of FIG. 14 and selects a product or the like under consideration for purchase (hereafter called a purchase consideration product or the like), from the products or the like advertised by the advertisement images PR01 through PR03 listed on the search results page PC. In this preferred embodiment, the explanation is for the case where the user is considering purchase of the product "XB tomato", but this is intended to be illustrative and not limiting.

Next, the input device of the terminal device 101 is operated by the user to input a signal selecting the advertisement image PR03 advertising the selected product "XB tomato". Following this, the terminal device 101 sends to the search device 200 a reply request that is a request including information indicating the URL "./public_dir/C002.html" of the advertisement page linked to the chosen advertisement image PR03, requesting a reply to that linked advertisement page.

When execution of step S03 in FIG. 3 concludes, the LAN card 200f of FIG. 2 receives information from the terminal device 101 and the acquiring part 220 of FIG. 4 acquires information received by the LAN card 200f. Next, the acquiring part 220 determines that the acquired information is not an input request (step S01c in FIG. 3: No) and is not a search query (step S02: No) but is a reply request (step S04: Yes). Next, a requested page output process such as the one shown in FIG. 15 is executed to output the page for which a reply is requested by that request (hereafter called the requested page) (step S05).

When the requested page output process of FIG. 15 is started, the acquiring part 220 of FIG. 4 extracts information indicating the URL "./public_dir/C002.html" of the requested page (hereafter called the requested page URL) from the reply request (step S31). Next, the searching part 230 reads information indicating the advertisement page PA1 having the requested page URL indicated by the extracted information, from the information storage device 210 (step S32). In this advertisement page PA1, an image PA of the product or the like that is the target of advertising and advertising text TA for that product or the like are posted, such as is shown in FIG. 16.

After step S32 of FIG. 15, the searching part 230 adds a value of "1" to the viewed page counter (step S33). That is because the user viewed the advertisement page PA1. Next, the searching part 230 searches the product or the like ID "M002" of the product or the like posted (that is to say, advertised) on the advertisement page having that URL, based on the requested page URL "./public_dir/C002.html" extracted in step S32 of FIG. 15, from the relation table of FIG. 10 (step S34). Following this, the searching part 230 reads out information indicating the search query "pizza" stored in the information storage device 210 in step S24 of FIG. 13 (step S35).

Next, the updating part 260 acquires information indicating the view count "9,650" correlated to the attribute ID "F1", the product or the like ID "M002" and the keyword matching the search query "pizza" indicated by the information that was read, in the product or the like keyword table of FIG. 9A and 9B. Next, the updating part 260 updates the acquired information indicating view number to information indicating the number "9,651" found by adding the value of "1" to that view count.

In addition, the updating part 260 updates the information indicating the average view number correlated to the attribute ID "F1 ", the product or the like ID "M002" and the search query "pizza" in the product or the like keyword table, based on the value of the viewed page counter. The value of the viewed page counter indicates the number of other Web pages viewed from this query designation time until the advertisement page of "XB tomato" is viewed by the user.

Furthermore, the updating part 260 reads out information indicating the query designation time stored in the information recording device 210 in step S24 of FIG. 13. Next, the updating part 260 calculates the time from the query designation time indicated by the read-out information to the system time of the OS. This calculated time is the required time from the query designation time until the advertisement page for "XB tomato" is viewed by the user.

Next, the updating part 260 updates the information indicating the average time required correlated to the attribute ID "F1" and the product or the like ID "M002" and the search query "pizza" in the product or the like keyword table, based on the required time calculated this time (step S36).

In this preferred embodiment, the explanation was for a case in which the updating part 260 updates the average number of views correlated to the attribute ID "F1", the product or the like ID "M002" and the search query "pizza" in the product or the like keyword table based on the value of a viewed page counter that calculates only the number of Web pages returned by the search device 200, but this is intended to be illustrative and not limiting. For example, it is possible to utilize a composition wherein the terminal device 101 counts the number of Web pages displayed by the terminal device 101 (that is to say, the sum of the number of Web pages returned by the search device 200 and the number of Web pages returned by a device other than the search device 200) from search query input until the advertisement Web page of the terminal device 101 is displayed (that is to say, until viewed), and returns to the search device 200 information indicating the number of Web pages counted. In this composition, it is fine for the search device 200 to update the information indicating the average number of views correlated to the attribute ID "F1", the product or the like ID "M002" and the search query "pizza" based on the information indicating the number of Web pages received from the terminal device 101.

After step S36 in FIG. 15, the exhibiting part 240 of FIG. 4 concludes the requested page output process after outputting the information indicating the advertisement page read in step S32 to the LAN card 200f as information indicating the requested page (step S37). Following this, the LAN card 200f returns the information indicating the requested page to the terminal device 101.

The terminal device 101 displays the requested page (that is to say, the advertisement page) PA1 of FIG. 16 based on information received from the search device 200. Upon visually confirming the advertisement page PA1, the user of the terminal device 101 confirms whether or not there is intent to purchase the product "XB tomato" advertised on that advertisement page PA1. Upon confirming that there is purchase intent, the user operates the input device of the terminal device 101 and accomplishes a click operation after overlaying a cursor CS displayed on the display device over a button BT of the advertisement page PA1. Following this, when a signal indicating that a click operation was accomplished by the input device is input, the terminal device 101 adds the product or the like ID "M002" of the product or the like advertised on that page to the list variable (that is to say, shopping cart) storing the product or the like IDs for products or the like for which purchase intent was shown. Following this, the terminal device 101 sends to the search device 200 information indicating the product or the like IDs stored in the shopping cart (hereafter called cart information).

When the process in step S05 of FIG. 3 concludes, the acquiring part 220 of FIG. 4 acquires from the LAN card 200f of FIG. 2 information received from the terminal device 101. Next, the acquiring part 220 determines that the information is not an input request (step S01c in FIG. 3: No), is not a search query (step S02: No), is not a reply request (step S04: No) but is cart information (step S06: Yes). Next, a keyword update process such as the one shown in FIG. 17 is executed to update keywords correlated to the product or the like IDs stored in the shopping cart (step S07).

When execution of the keyword update process in FIG. 17 begins, the searching part 230 of FIG. 4 reads out the first product or the like IDs "M002", "M003" and "M006" stored in the information storage device 210 in step S24 of FIG. 13 (step 41). Next, the searching part 230 specifies the product or the like ID "M002" included in the cart information acquired by the acquiring part 220 as the product or the like ID of the product or the like for which purchase intent has been shown by the user (step S42). The product or the like for which purchase intent has been shown by the user is called a purchase product or the like, and the product or the like ID of the purchase product is called the purchase product or the like ID.

Next, the searching part 230 specifies the purchase product or the like ID "M002" matching the first product or the like ID "M002" read out in step S41 as the product or the like ID of the first product or the like for which purchase intent was shown by the user. The first product or the like for which purchase intent was shown by the user is called the purchase first product or the like, and the product or the like ID of the purchase first product or the like is called the purchase first product or the like ID.

In contrast, when there is a purchase product or the like ID not matching the first product or the like ID, that purchase product or the like ID is taken to be the product or the like ID of a second product or the like for which purchase intent was shown by the user, out of second products or the like that are products or the like differing from the first product or the like. The second product or the like for which purchase intent was shown by the user is called the purchase second product or the like, and the product or the like id of the purchase second product or the like is called the purchase second product or the like ID.

Next, the searching part 230 determines whether or not both the purchase first product or the like ID and the purchase second product or the like ID are included in the cart information (step S43).

At this time, the searching part 230 determines that only the purchase first product or the like ID "M002" is included in the cart information so the purchase second product or the like ID is not included in the cart information (step S43: No), and execution of the keyword update process concludes.

Here, it is not the case that in the advertisement page PA1 of FIG. 16, only advertisement images PS advertising the "XB tomato" of the first product or the like searched based on the search query "pizza" are posted. Images PR1 and PR2, which are images of related products or the like related to that product or the like and in which links to the advertisement pages of that related product or the like (that is to say, related pages) are affixed, are posted in the advertisement page PA1. In this preferred embodiment, the explanation is for a case in which the related products or the like of that product or the like were products bundle-sold or the like with the product or the like in the past, but this is intended to be illustrative and not limiting.

Here, the user of the terminal device 101 who visually confirmed the advertisement page PA1 selects as the purchase consideration product or the like the product "XD mozzarella cheese" advertised in the advertisement image PR2 posted on the advertisement page PA1 in order to make pizza. Next, the input device of the terminal device 101 is operated by the user to input a signal to select that advertisement image PR2. Following this, the terminal device 101 sends to the search device 200 a reply request including information indicating the URL "./public dir/C004.html" of an advertisement page linked in the advertisement image PR2 selected by the inputted signal.

Following step S07 in FIG. 3, the acquiring part 220 of FIG. 4 acquires from the LAN card 200f of FIG. 2 information received from the terminal device 101. Next, the acquiring part 220 determines that the acquired information is not an input request (step SOlc in FIG. 3: No) and is not a search query (step S02: No), but is a reply request (step S04; Yes). Next, the requested page output process for outputting as a requested page an advertisement page PA2 such as the one shown in FIG. 18 advertising the product "XD mozzarella cheese" for which a reply was requested with that request is executed again (step S05 in FIG. 3).

The user of the terminal device 101 visually confirms the advertisement page PA2 sent as a reply from the search device 200 and, upon confirming that there is intent to purchase the product "XD mozzarella cheese" advertised by that advertisement page, operates the input device of the terminal device 101. Following this, the terminal device 101 further adds the product or the like ID "M004" of the product "XD mozzarella cheese" to the shopping cart to which the product or the like ID "M002" has already been added, and following this sends the cart information to the search device 200.

When the process of step S05 of FIG. 3 concludes, the acquiring part 220 of FIG. 4 acquires from the LAN card 200f of FIG. 2 the information sent again from the terminal device 101. Next, the acquiring part 220 determines that this information is not an input request (step S01c in FIG. 3: No), is not a search query (step S02: No), and is not a reply request (step 04: No), but is cart information (step S06: Yes). Next, the keyword update process of FIG. 17 is against executed (step S07).

When execution of the keyword update process of FIG. 17 is again started, the searching part 230 of FIG. 4 reads out the first product or the like IDs "M002", "M003", and "M006" (step S41). Following this, the searching part 230 specifies the product or the like IDs "M002" and "M004" included in the acquired art information as the purchase product or the like IDs (step S42).

Next, the searching part 230 specifies the purchase product or the like ID "M002" matching the first product or the like I "M002" read out in step S41 as the purchase first product or the like. In addition, the searching part 230 specifies the purchase product or the like ID "M004", which does not match any of the first product or the like IDs "M002", "M003" and "M006", as the purchase second product or the like ID.

Next, the searching part 230 determines that both the purchase first product or the like ID "M002" and the purchase second product or the like ID "M004" are included in the cart information (step S43: Yes). Next, the searching part 230 searches for the related product or the like IDs "M003" and "M004" correlated to the same product or the like ID as the purchase first product or the like ID "M002" from the relation table of FIG. 10 (step S44).

Next, the searching part 230 determines that the related product or the like ID "M004" searched matches the purchase second product or the like ID "M004" specified in step S42. Next, the searching part 230 determines that the purchase second product or the like "XD mozzarella cheese" identified with "M004" is a related product of the purchase first product or the like "XB tomato" (step S45: Yes).

The searching part 230, in step S45, determines that the purchase second product or the like "XD mozzarella cheese" identified with "M004" is not a related product of the purchase first product or the like "XB tomato" (step S45: No). The searching part concludes execution of the keyword update process without executing the process in step S48. The process in step S48 is a process for correlating that purchase second product or the like to the product or the like ID, with the search query used in searching for the purchase first product or the like as a keyword for describing the purchase second product or the like also.

Normally, multiple products or the like having common characteristics or multiple products or the like used in common applications, such as used in the same cuisine, for example, are frequently bundle-sold together. Consequently, advertisement pages advertising each are frequency mutually related (that is to say, linked). In contrast, because cases where multiple products or the like having no common characteristics and not used in common applications are bundle-sold together are few, there are few cases where advertisement pages advertising these respective products or the like are mutually linked. Consequently, when the advertisement page of the purchase first product or the like and the advertisement page of the purchase second product or the like are not mutually linked, a search query used to search for the purchase first product or the like has a low possibility of being a keyword for also describing the purchase second product or the like for which purchase intent was shown in combination with the purchase first product or the like. Consequently, the process in the above-described step S48 is not executed.

The searching part 230, in step S45, has determined that the purchase second product or the like identified with "M004" is a related product to the purchase first product or the like (step S45: Yes). Consequently, the searching part 230 reads out information indicating the search query "pizza" stored in the information storage device 210 in step S24 of FIG. 13 (step S46). Following this, the updating part 260 of FIG. 4 determines whether or not the information indicating the read-out search query "pizza" and the attribute ID "F1" and the purchase second product or the like ID "M004" are already correlated in the product or the like keyword table of FIG. 9A and 9B (step S47).

At this time, the updating part 260 determines that the information indicating the search query "pizza" and the attribute ID "F1" and purchase second product or the like ID "M004" are not already correlated (step S47: No). Next, the updating part 260 sets the information indicating the search query "pizza" as information indicating a keyword describing the purchase second product or the like. Furthermore, the updating part 260 stores the information indicating that keyword in the product or the like keyword table of FIG. 9A and 9B, correlated to the attribute ID "F1" and the purchase second product or the like ID "M004" (step S48), following which execution of the keyword update process concludes.

Through this, the information indicating the URL of the page PA2 advertising the second product or the like identified with the second product or the like ID "M004", being information indicating the URL of the advertisement page PA2 stored in the product or the like table of FIG. 8, and the attribute ID "F1" and information indicating the keyword "pizza" stored in the product or the like keyword table of FIG. 9A and 9B, are correlated via the purchase second product or the like ID "M004".

The updating part 260 searches for the product or the like ID "M002" of the related product or the like of the purchase second product or the like ID "M004" from the relation table in FIG. 10, and when information indicating the keyword "pizza" is not correlated to the product or the like ID "M002" of that related product or the like, it would be fine to further correlate information indicating the keyword "pizza" to that product or the like ID "M002".

With this composition, as a keyword describing the related product or the like related to a purchase second product or the like, a search query for the purchase first product or the like bundle-sold with that purchase second product or the like is correlated to the product or the like ID of that related product or the like. Consequently, if the advertisement page of that related product or the like is searched and viewed, it becomes easier for the advertisement page of that purchase second product or the like linked to that advertisement page to be viewed and it becomes easier to increase sales amount of that purchase second product or the like.

When in step S47 the updating part 260 determines that the information indicating the search query "pizza" and the purchase second product or the like ID "M004" are already correlated (step S47: Yes), execution of the keyword update process concludes. In this case, that is because it is not necessary to execute the process of step S48.

Here, a character string indicating the affiliated genre 'mozzarella cheese" to which that product belongs and a character string LJ1 indicating the genre "dairy products" higher than that genre "mozzarella cheese" are noted on the advertisement page PA2 of FIG. 18. In addition, a character string LJ2 indicating the genre "food" higher than that genre "dairy products", and a character string LJ3 indicating the genre "food/beverage" higher than that genre "food" are noted on the advertisement page PA2.

This character string "dairy products" LJ1 is linked to a search results page indicating search results for products or the like having the genre "dairy products" as the affiliated genre. Similarly, the character string "food" LJ2 is linked to a search results page indicating search results for products or the like having the genre "food" as the affiliated genre. Furthermore, the character string "food/beverage" LJ3 is linked to a search results page indicating search results for products or the like having the genre "food/beverage" as the affiliated genre.

Consequently, the user of the terminal device 101 who visually confirmed the advertisement page PA2 accomplishes a click operation after operating the input device of the terminal device 101 and overlaying the cursor CS displayed on the display device over the character string "food" LJ2. This is in order to further search for "basil" to be used in making pizza.

Following this, upon the input of a signal indicating that a click operation was accomplished by the input device, the terminal device 101 sends the genre ID "J0031" of the genre "food" and a character "*" indicating all keywords to the search device as a search query.

When the process in step S07 of FIG. 3 concludes, the acquiring part 220 acquires information received from the terminal device 101 by the LAN card 200f. Next, when the acquiring part 220 determines that this information is not an input request (step S01c of FIG. 3: No) but is a search query (step S02: Yes), the detected results page output process is again executed (step S03).

Through this, the product or the like IDs "M001" through "M008" are searched from the product or the like keyword table of FIG. 9A and 9B. In addition, a detected results page linked to the advertisement page of products or the like (that is to say, all products or the like having as affiliated genres the genre "food" and genres subordinate to that genre) respectively identified with those searched product or the like IDs "M001" through "M008" is sent to the terminal device 101.

The user of the terminal device 101 is considering purchasing "basil", so the terminal device 101, upon operation by the user, sends to the search device 200 a reply request including information indicating the URL "./public_dir/C005.html" of the advertisement page advertising the product "XE basil" identified with the product or the like ID "M005".

When the process of step S03 of FIG. 3 concludes, the acquiring part 220 again acquires information received from the terminal device 101 by the LAN card 200f. Next, the acquiring part 220 determines that the information acquired again is not an input request (step S01c of FIG. 3: No) and is not a search request (step S02: No), but is a reply request (step S04: Yes). Next, the requested page output process is again executed and an advertisement page advertising the product "XE basil" for which a reply was searched with that request is output as the requested page (step S05).

The user of the terminal 101 visually confirms the output advertisement page and upon confirming there is an intent to purchase the product "XE basil" advertised on that advertisement page, operates the input device of the terminal device 101. Following this, the product or the like ID "M005" of the product "XE basil" is further added to the shopping cart to which the product or the like IDs "M002" and "M005" have already been added, following which the cart information is sent to the search device 200.

When the process of step S05 of FIG. 3 concludes, the acquiring part 220 of FIG. 4 acquires information received from the terminal device 101 by the LAN card 200f. Next, when the acquiring part 220 determines that this information is not an input request (step S01c in FIG. 3: No), is not a search request (step S02: No) and is not a reply request (step S04: No), but is cart information (step S06: Yes), the keyword update process of FIG. 17 is again executed (step S07).

Here, as shown in the relation table of FIG. 10, the product "XE basil" identified with the product or the like ID "M005" is not related to any of the first products respectively identified with the first products or the like "M002", "M003" and "M006". Consequently, the product "XE basil" is not a related product to the first products or the like (step S45 in FIG. 17: No), so the keyword update process concludes without the product or the like ID "M005" of the product "XE basil" and information indicating the designated search query "pizza" being correlated.

Here, a character string LT that is "top" linked to the input page of FIG. 12 is noted in the advertisement page PA2 of FIG. 18. Consequently, the user of the terminal device 101 who visually confirmed the advertisement page PA2 operates the input device of the terminal device 101 and accomplishes a click operation after overlaying the cursor CS displayed on the display device over the character string "top" LT. This is in order to further search for "wheat flour" used in making pizza dough. Following this, the terminal device 101 sends an input request to the search device 200.

When the process in step S07 of FIG. 3 concludes, the acquiring part 220 of FIG. 4 acquires from the LAN card 200f of FIG. 2 information received from the terminal device 101. Next, the acquiring part 220 determines that the information acquired is an input request (step S01c of FIG. 3: Yes). Following this, the exhibiting part 240 of FIG. 4 outputs information indicating an input page PI to the LAN card 200f of FIG. 2 (step S01d), and the LAN card 200f replies with the output information to the terminal device 101.

The terminal device 101 receives information indicating the input page PI and displays the input page PI indicating the received information on the display device. Next, the terminal device 101, upon being operated by a user who has visually confirmed the input page PI, inputs the search query "wheat flour" designated by that user and the genre ID "J3121" of the genre "wheat flour". Following this, the terminal device 101 sends the input search query "wheat flour" and the genre ID "J3121" to the search device 200.

Following step S01d of FIG. 3, the acquiring part 220 of FIG. 4 acquires from the LAN card 200f of FIG. 2 the search query "wheat flour" and the genre ID "J3121" received from the terminal device 101. Following this, the acquiring part 220 determines that an input request was not acquired from the terminal device 101 (step S01c of FIG. 3: No) but that a search query was acquired (step S02: Yes). Following this, the search results page output process of FIG. 13 is executed (step S03).

When the search results page output process of FIG. 13 is started, the process of step S21 is executed and the product or the like ID "M001" and the degree of importance of the product "XA wheat flour" identified with that product or the like ID are searched (step S21). Next, the searching part 230 of FIG. 4 acquires the system time from the OS and then reads out information indicating the query designation time stored in the information storage device 110 in step S24. Following this, the searching part 230 determines that the predetermined time from the query designation time has not yet elapsed (step S22: Yes). Information indicating the predetermined time is stored in the information storage device 110.

Following this, the searching part 230 reads out the first product or the like ID stored in the information storage device 110 in step S24. Next, the searching part sets the product or the like ID that is not the first product or the like ID within the product or the like IDs searched for in step S21 as the second product or the like ID (step S30). Next, the process corresponding to steps S24 and S25 is not executed but the process from step S26 through step S29 is executed. Through this, information indicating a search results page on which is posted an advertisement image to which an advertisement page for "XA wheat flour" is linked is returned to the terminal device 101 (steps S26 through S29).

The terminal device 101 displays the search results page indicated by the information received from the search device 200 on the display device. The user of the terminal device 101 visually confirms the displayed search results page and sets the product "XA wheat flour" advertised by the advertisement image posted on the search results page as a purchase consideration product or the like. Next, the input device of the terminal device 101 is operated by the user and a reply request including information indicating the URL "./public_dir/C001.html" of the advertisement page linked to the advertisement image of the "XA wheat flour" is sent to the search device 200.

When execution of step S03 of FIG. 3 concludes, the acquiring part 220 of FIG. 4 acquires the information the LAN card 200f of FIG. 2 received from the terminal device 101. Next, the acquiring part 220 determines that the acquired information is not an input request (step S01c of FIG. 3: No) and is not a search query (step S02: No) but is a reply request (step S04: Yes). Following this, a requested page output process that outputs the requested page (that is to say, the advertisement page for the "XA wheat flour") is executed and information indicating that advertisement page is returned to the terminal device 101.

The terminal device 101 displays the advertisement page of the "XA wheat flour" indicated by information received from the search device 200. Upon confirming that there is intent to purchase the product "XA wheat flour", the user who has visually confirmed the advertisement page operates the input device of the terminal device 101. Following this, the terminal device 101 adds the product or the like ID "M001" of the product "XA wheat flour" indicated by the purchase intent to the shopping cart to which "M002", "M004" and "M005"have already been added. Following this, the terminal device 101 sends the cart information to the search device 200.

When the process of step S05 of FIG. 3 concludes, the acquiring part 220 of FIG. 4 acquires from the LAN card 200f the information received from the terminal device 101. Next, the acquiring part 220 determines that the acquired information is not an input request (step S01c of FIG. 3: No), is not a search query (step S02: No) and is not a reply request (step S04: No), but is a cart information (step S06: Yes). Following this, the keyword update process is executed (step S07). Through this, the designated search query "pizza" is correlated to the product or the like ID "M001" of the product "XA wheat flour" and information indicating the advertisement page URL.

Next, the user of the terminal device 101 decides to accomplish settlement of the product or the like for which purchase intent was shown and operates the input device of the terminal device 100. The terminal device 100 is operated by the user and sends to the search device 200 a settlement request that is a request seeking settlement and that includes the product or the like IDs added to the shopping cart.

When the process of step S07 of FIG. 3 concludes, the acquiring part 220 of FIG. 4 acquires from the LAN card 200f the information received from the terminal device 101. Next, the acquiring part 220 determines that the acquired information is not an input request (step S01c of FIG. 3: No), is not a search query (step S02: No) and is not a reply request (step S04: No). In addition, the acquiring part 220 determines that the acquired information is not cart information (step S06: No) but is a settlement request (step S08: Yes). Next, the settling part 250 of FIG. 4 searches for information indicating the prices respectively correlated to the product or the like IDs "M001", "M002", "M004" and "M005" included in the settlement request, from the product or the like table of FIG. 8. Next, the settling part 250 calculates the purchase amount of the products or the like based on the searched information and accomplishes a settlement process paying the calculated amount for example using a credit card number (step S09 of FIG. 3).

Next, the updating part 260 reads out the information indicating the search query "pizza" stored in the information storage device 210 in step S24 of FIG. 13. Next, the updating part 260 acquires information indicating the number of settlements correlated respectively to the attribute ID "F1", information indicating that search query "pizza" and the product or the like IDs "M001", "M002", "M003" and "M005" of the settled products or the like. Next, the updating part 260 respectively updates the acquired information indicating the number of settlements to information indicating that number of settlements to which the value "1" has been added.

Next, the updating part 260 acquires information indicating the conversion rate correlated to the attribute ID "F1", information indicating that search query "pizza" and the settled product or the like ID "M002". Next, the updating part 260 updates the acquired information indicating the conversion rate based on the updated information indicating settlement number and information indicating the total view frequency correlated to the attribute ID "F1", the information indicating the search query "pizza" and the settled product or the like ID "M002". In addition, the updating part 260 similarly updates the information indicating conversion rates respectively correlated to the product or the like IDs "M004" and "M005" also.

Next, the updating part 260 updates information indicating the average purchase amount correlated to the attribute ID "F1", the information indicating that search query "pizza" and the settled product or the like ID "M001 ", based on the purchase amount calculated in step S09 of FIG. 3. In addition, the updating part 260 similarly updates information indicating the average purchase amount respectively correlated to the product or the like IDs "M002", "M004" and "M005".

Furthermore, the updating part 260 calculates the number of products of bundle-sold products or the like and the number of types of bundle-sold products or the like, based on the product or the like IDs included in the settlement request. Next, the updating part 260 respectively updates the information indicating the average number of bundle sales and information indicating the average number of bundle-sold types correlated to the attribute ID "F1", the information indicating that search query "pizza" and the settled product or the like ID "M001" using the calculated information indicating the average number of bundle sales and information indicating the average number of bundle-sold types. In addition, the updating part 260 similarly updates the information indicating the average number of bundle sales and information indicating the average number of bundle-sold types respectively correlated to the product or the like IDs "M002", "M004" and "M005". This updated information is used in updating the information indicating degree of importance.

Furthermore, when the search query is set as the keyword of the settled product or the like, the updating part 260 calculates an indicator (hereafter called the uniqueness) indicating to what degree that keyword is unique as a keyword explaining the products or the like of the genre to which that product or the like belongs. That is to say, for example the keyword "generic" is widely used as a keyword for describing products or the like belonging to the genre "pharmaceuticals" but is rarely used as a keyword for describing products or the like belonging to other genres. Consequently, the keyword "generic" could be said to be unique as a keyword for describing products or the like belonging to "pharmaceuticals." In contrast, for example the keyword "free shipping" is used as a keyword for describing products or the like of nearly all genres and thus could not be called a unique word.

In order to calculate this uniqueness, the updating part 260 searches for affiliated genre IDs "J3111", "J3121 ", "J3131" and "J3151" correlated via the product or the like ID to the attribute ID "F1" and information indicating that search query "pizza" and the same keyword, from the product or the like keyword table of FIG. 9A and 9B and the product or the like table of FIG. 8. Next, the updating part 260 calculates the number of types of searched affiliate genre IDs and calculates the number of lowest level genre IDs (in other words, the total number of lowest level genres) using the genre hierarchy table of FIG. 7. Following this, the updating part 260 calculates the number of types of searched affiliate genre IDs as a percentage of the number of lowest level genre IDs, and calculates the uniqueness such that the lower the calculated percentage, the higher the uniqueness. This calculated uniqueness is used in updating the information indicating degree of importance.

In addition, the updating part 260 determines that the products or the like identified with these product or the like IDs were bundle-sold because multiple product or the like IDs "M001", "M002", "M004" and "M005" are included in the settlement information. Next, the updating part 260 searches for information indicating the bundle-sold frequency "2" and the product or the like ID "M002" correlated to information indicating that search query "pizza" from the bundle-sale status table of FIG. 11. Following this, the updating part 260 updates the information indicating the bundle-sold frequency "2" correlated to the information indicating the search query "pizza" and the product or the like ID "M002" to information indicating "3", or this value increased by 1. In addition, the updating part 260 adds to the bundle-sale status table information correlated to the information indicating that search query "pizza", the settled product or the like ID "M001" and information indicating the bundle-sale frequency "1". Similarly, the updating part 260 adds information correlated to that search query "pizza", the settled product or the like ID and information indicating the bundle-sold frequency "1" to the bundle-sale status table for the product or the like IDs "M004" and "M005". This information indicating the bundle-sale frequency is used in updating information indicating degree of importance.

Following this, the updating part 260 acquires one or more of the bundle-sale frequency, the average purchase amount, the average bundle-sale number, the average number of bundle-sold types, the average number of views, the average time required, the total page views, the conversion ratio and the uniqueness indicated by information correlated to the attribute ID "F1", the information indicating the search query "pizza" and the settled product or the like ID "M001". Next, the updating part recalculates the degree of importance using one or more of the bundle-sale frequency, the average purchase amount, the average bundle-sale number, the average number of bundle-sold types, the average number of views, the average time required, the total page views, the conversion ratio and the uniqueness. The updating part 260 similarly recalculates the degree of importance for the product or the like IDs "M002", "M004" and "M005".

Next, the updating part 260 acquires information indicating the degree of importance correlated to the attribute ID "F1", the information indicating the search query "pizza" and the settled product or the like ID "M001" in the product or the like keyword table of FIG. 9A and 9B. Next, the updating part 260 executes a degree of importance update process that updates the acquired information indicating the degree of importance with the recalculated information indicating degree of importance (step S10 in FIG. 3). In the degree of importance update process, the updating part 260 similarly updates information indicating degree of importance for the product or the like IDs "M002", "M004" and "M005". Following this, the updating part 260 concludes execution of the product or the like sales process.

In the In the degree of importance update process in step S10 of FIG. 3, when the degree of importance is updated using the number of bundle sales, the update is accomplished such that the larger the number of bundle sales, the higher the post-update degree of importance. That is because for example in the bundle sales status table of FIG. 11, out of the products or the like "XB tomato", "XC olive oil", "XD mozzarella cheese" and "XE basil" that are bundle-sold with products or the like searched with the search query "pasta", it is thought that the "XB tomato" with a large number of past bundle sales will have a larger number of purchases in the future as well than the number for other products or the like.

In addition, when the degree of importance is updated using the average purchase amount, the update is accomplished such that the larger the average purchase amount, the higher the post-update degree of importance. Similarly, when the updating part 260 updates the degree of importance using the average number of bundle sales, the update is accomplished such that the larger the average number of bundle sales, the higher the post-update degree of importance. In contrast, when the updating part 260 updates the degree of importance using the average number of bundle sales types, the update is accomplished so that the higher the average number of bundle sales types, the higher the post-update degree of importance. This is because the larger the number of products or the like bundle-sold on average, the higher the average sales amount. Similarly, the larger the number of types of products or the like bundle-sold on average, the higher the average sales amount. Furthermore, when the updating part 260 updates the degree of importance using page views, the update is accomplished such that the more the page views, the higher the post-update degree of importance. That is because typically products or the like are purchased by more users the larger the number of page views.

Furthermore, when the updating part 260 updates the degree of importance using the average number of views, the update is accomplished so that the smaller the average number of views, the higher the post-update degree of importance. In contrast, when the updating part updates the degree of importance using the average required time, the update is accomplished such that the shorter the average required time, the higher the post-update degree of importance. That is because the smaller the average number of views, the easier it is for the user to view the advertisement page and the easier products or the like advertised on the advertisement page are to purchase, so the sales amount of the products or the like increases. Similarly, the shorter the average required time, the easier it is for the user to view the advertisement page, and the easier products or the like advertised on the advertisement page are to purchase, so the sales amount of the products or the like increases.

Furthermore, when the updating part 260 updates the degree of importance using the conversion ratio, the update is accomplished such that the higher the conversion ratio, the higher the post-update degree of importance. That is because the higher the conversion ratio, the easier it is for the sales amount of the product or the like to increase.

In addition, when the updating part 260 updates the degree of importance using the uniqueness, the update is accomplished such that the higher the uniqueness, the higher the post-update degree of importance. That is because keywords with a high uniqueness are viewed as more important by users when selecting the product or the like than are keywords with low uniqueness in genres to which products or the like described by that keyword belong. That is to say, that is because when the degree of importance correlated to a keyword with high uniqueness is updated to a high value, the sales amount of products described by that keyword increases.

In this preferred embodiment, the updating part 260 was explained as correlating the designated search query "pizza" to the purchased second product or the like ID "M004" (step S48) when one first product or the like ID "M002" and one purchase second product or the like ID "M004" are included in the cart information (step S43 of FIG. 17: Yes), but this is intended to be illustrative and not limiting. When one first product or the like ID and multiple purchase second product or the like IDs are included in the cart information and when multiple first product or the like IDs and multiple purchase second product or the like IDs are included in the cart information, it would be fine for the updating part 260 to respectively correlate the designated search query to the multiple purchase second product or the like IDs. In addition, when multiple first product or the like IDs and one purchase second product or the like ID are included in the cart information, it would be fine for the updating part 260 to correlate the designated search query to the one purchase second product or the like ID.

In addition, in this preferred embodiment when one purchase first product or the like ID and one purchase second product or the like ID are included in the cart information, and that purchase second product or the like ID is a related product or the like ID identifying a related product or the like of the product or the like identified with that first product or the like ID (step S45 of FIG. 17: Yes), the updating part 260 correlates the designated search query to that purchase second product or the like ID (step S48). However, when that purchase second product or the like ID is not a related product or the like ID identifying a related product or the like of the product or the like identified with that first product or the like ID (step S45: No), the updating part 260 does not execute the process of step S48. This was the explanation presented, but this is intended to be illustrative and not limiting.

When one purchase first product or the like ID and multiple purchase second product or the like IDs are included in the cart information and any of the multiple purchase second product or the like IDs is a related product or the like ID identifying a related product or the like of the product or the like identified with that first product or the like ID, it is possible to utilize a composition in which the updating part 260 correlates the designated search query to only the purchase second product or the like ID that is that related product or the like ID. In this composition, when none of the multiple purchase second product or the like IDs is a related product or the like ID identifying a related product of the product or the like identified with that first product or the like ID, it is possible to utilize a composition in which the updating part 260 does not execute the process of step S48.

In addition, it is possible to use a composition such that when multiple purchase first product or the like IDs and one purchase second product or the like ID are included in the cart information and that one purchase second product or the like ID is any of the related product or the like IDs identifying a related product or the like of the products or the like respectively identified with those multiple first product or the like IDs, the updating part 260 correlates the designated search query to that purchase second product or the like ID. In this composition, it is possible to utilize a composition such that when that purchase second product or the like ID is not any of the related product or the like IDs identifying a related product or the like of the products or the like respectively identified with the multiple first product or the like IDs, the updating part 260 does not execute the process of step S48.

Furthermore, it is possible to utilize a composition wherein when multiple purchase first product or the like IDs and multiple purchase second product or the like IDs are included in the cart information and any of the multiple purchase product or the like IDs are any of the related product or the like IDs identifying a related product or the like of the products or the like respectively identified with the multiple first product or the like IDs, the updating part 260 correlates the designated search query only to the purchase second product or the like IDs that are any of the related product or the like IDs. In this composition, it is possible to utilize a composition wherein when all of the multiple purchase second product or the like IDs are not related product or the like IDs identifying a related product or the like ID of the products or the like respectively identified with the multiple first product or the like IDs, the updating part 260 does not execute the process of step S48.

### (Variation 1)

In addition, in this preferred embodiment, when the purchase second product or the like ID included in the cart information is a related product or the like ID identifying a related product or the like of the product or the like identified with the first product or the like ID (step S45 of FIG. 17: Yes), the updating part 260 correlates the designated search query to the that purchase second product or the like ID (step S48). However, when such is not the case (step S45: No), the explanation was that the updating part 260 does not correlate the designated search query to that purchase second product or the like ID, but this is intended to be illustrative and not limiting.

For example, as shown in FIG. 19 it is possible to utilize a composition such that when the purchase second product or the like ID included in the cart information is a related product or the like ID identifying a related product or the like of the product or the like identified with the first product or the like or when the searching part 230 determines that both the purchase first product or the like ID and the purchase second product or the like ID are included in the cart information (step S43 of FIG. 19: Yes), if the designated search query is not correlated to that purchase second product or the like ID (step S47 of FIG. 19: No), the updating part 260 correlates the designated search query to that purchase second product or the like ID (step S48 of FIG. 19). In this composition, when the searching part 230 determines that neither the purchase first product or the like ID nor the purchase second product or the like ID is included in the cart information (step S43 of FIG. 19: No), or when the designated search query is already correlated to that purchase second product or the like ID (step S47 of FIG. 19: Yes), the updating part 260 does not execute the process of step S48 of FIG. 19. That is because execution of that process is not necessary.

### (Variation 2)

In this preferred embodiment, the exhibiting part 240 of FIG. 4 was explained as being realized by the CPU 200a of FIG. 2 working together with the LAN card 200f, information indicating a Web page being sent to the terminal device 101 and the Web page indicated by the sent information being displayed on the display device of the terminal device 101, but this is intended to be illustrative and not limiting. For example, it would be fine for the exhibiting part 240 to be realized by the CPU 200a working together with the LCD 200h of FIG. 2 to display a Web page.

### (Variation 3)

In addition, in this preferred embodiment, the explanation was that the search device 200 searches advertisement pages of the product or the like sold by an electronic store based on a received search query when a search query is received from the terminal device, and returns a search results page such as that shown in FIG. 14 to which the searched advertisement pages are linked, but this is intended to be illustrative and not limiting.

For example, it is possible to utilize a composition in which the search device 200 stores a Web page table such as that shown in FIG. 20 used for functioning as a search engine. In this Web page table, information is stored that correlates information indicating the Web page URL, information indicating the title of that Web page, information indicating a snippet that is a portion of the content of that Web page and information indicating keywords explaining the content posted on that Web page. It is fine for the Web page keywords to be keywords set by the creator of the Web page, and it is also fine for such to be keywords extracted from sentences posted on that Web page.

In the composition that stores this Web page table, it is possible to utilize a composition such that when a search query is received from the terminal device 101, the search device 200 searches information indicating the Web page URL correlated to the same keyword as the received search query, information indicating a title and information indicating a snippet, and creates a search results page such as the one shown in FIG. 21 in which are posted the title and snippets T1 through T3 indicated by the searched information. The search device 200 links Web pages having URLs correlated to that title, for titles posted in the search results page.

Furthermore, the search device 200 searches the same keyword as the received search query and the product or the like ID correlated to the attribute ID "F1" from the product or the like keyword table of FIG. 9A and 9B and sets the searched product or the like ID as the first product or the like ID. In addition, the search device 200 searches information indicating the advertisement file name correlated to the searched first product or the like ID and information indicating the advertisement page URL from the product or the like table of FIG. 8. Following this, the search device 200 posts the advertisement images PA31 and PA32 indicated by the searched advertisement file name on the search results page and links advertisement pages in the respectively corresponding URLs to those advertisement images PA31 and PA32.

In addition, when a request seeking for a reply of a Web page linked to the title T1 posted on the search results page as a requested page is received from the terminal device 101, the search device 200 reads out a requested page such as that shown in FIG. 22, extracts words from sentences posted on the requested page that is read out and decides the extracted words to be keywords describing that requested page.

Following this, the search device 200 searches the product or the like ID correlated to the decided keywords and the attribute ID "F1" from the product or the like keyword table of FIG. 9A and 9B. Next, the search device 200 searches information indicating the advertisement file name correlated to the searched product or the like ID and the advertisement page URL from the product or the like table of FIG. 8. It is possible to utilize a composition such that following this the search device 200 posts the advertisement image PA33 indicated by the searched advertisement file name on the requested page and links the advertisement page at the URL corresponding to that advertisement image PA33 to that advertisement image PA33.

With this kind of composition, when information (that is to say, cart information) indicating a user's purchase intent with respect to a first product or the like posted on the Web page at the location searched based on the search query (that is to say, the advertisement page) and a second product or the like posted on a different advertisement page from the advertisement page of the first product or the like is acquired before the prescribed time elapses from designation of the search query, the search query used when the advertisement page of the first product or the like is searched and the degree of importance calculated by a prescribed statistical process are correlated to the location of the advertisement page (that is to say, URL) where the second product or the like is posted. Here, the second product or the like purchased in conjunction with the first product or the like before the prescribed time elapses from designation of the search query is for example often used by the user to achieve a mutually common objective such as being ingredients for the same cuisine, or have mutually common properties. Accordingly, that search query is often a keyword that appropriately describes not just the first product or the like but also the second product or the like. Consequently, with this kind of composition, for an advertisement page on which the second product or the like is posted, it is possible to correlate a search query not directly derived from that advertisement page along with the degree of importance of that keyword, as a keyword describing that advertisement page (and the product or the like posted on that advertisement page). Consequently, it is possible to search the advertisement pages of the second product or the like that efficiently contribute to sales on the basis of the newly correlated keyword and the degree of importance of that keyword.

In addition, for example even when a seller selling a second product or the like correlates an inappropriate choice as a keyword describing the second product or the like to the URL of the advertisement site on which the second product or the like is posted, it is possible to correlate a search query that is a more appropriate keyword and a degree of importance indicating the extent to which that keyword is appropriate to the URL of the advertisement site of that second product or the like. As a concrete example, for the product that in general is called a "niku-man" but in only some specific regions is called a "buta-man," even if only the keyword "buta-man" is correlated thereto if that product is purchased after "niku-man" designated in general is designated as a search query to search that product, "niku-man", which is more appropriate as a keyword for that product, and the degree of importance of that keyword are newly correlated to the product or the like ID of that product.

In addition, for example when it is widely known by the public in general that a popular actor and/or other famous person loves the second product or the like, a search query used more often than other search queries to search advertisement pages on which the second product or the like is posted for example at times changes to a keyword indicating the name of that famous person. In addition, a first product or the like purchased in a bundle with the second product or the like often has common circumstances as the second product or the like, such as it already being widely known that the same famous person loves this first product or the like. Accordingly, searches are often made using the same queries as queries widely used in searching for the second product or the like. Consequently, with this kind of composition, search queries used in searching for the first product or the like bundle-sold with the second product or the like are correlated to the second product or the like, so even when a search query widely used to search for an advertisement page of the second product or the like changes, it is possible to search for the location of advertisement pages for that second product or the like based on that post-change query.

In particular, for example often among users have the same attribute, such as among users of the same age range and/or among users of the same sex, often an actor more popular than among users have different attributes such as among users of a different age range or among users of a different sex is common, for example. Consequently, with this kind of composition, the degree of importance indicating the extent to which using a given keyword in a search for a given product or the like contributes to sales of a store selling or the like that product or the like is calculated for each attribute of the user, so sales of the product or the like increase more than the case when the degree of importance is not calculated for each attribute of the user.

In addition, with this kind of composition, when a related page related to an advertisement page of the first product or the like at a location searched based on a search query is an advertisement page on which the second product or the like for which the user has shown an intent to purchase is posted, the location of that related page and that search query are correlated. Here, often a product or the like posted on a related page of an advertisement page on which the first product or the like is posted has properties related to the first product. Consequently, it is possible to correlate appropriate keywords not directly derived from that advertisement page to the advertisement page on which the second product or the like is posted.

Furthermore, with this composition, results in which URLs of advertisement pages searched based on a search query are sorted in accordance with the degree of importance correlated to those URLs are exhibited to the user. Consequently, by increasing the number of keywords correlated to an advertisement page, even if the number of advertisement pages searched based on the search query increases, it is possible for a user to easily find the desired advertisement page.

In general, the larger the number of products or the like purchased, or the larger the number of types of products or the like purchase, the larger the settlement amount. In addition, the higher the conversion ratio of an advertisement page, the greater the possibility that a user who has viewed that advertisement page will purchase or the like the product or the like posted on that advertisement page. Consequently, with this composition, the degree of importance correlated to the location of advertisement pages on which the second product or the like is posted is updated based on settlement amount, total number of products or the like purchased at settlement, number of types of products or the like purchased and the conversion ratios of advertisement pages on which the second product or the like is posted, so it is possible to increase sales amount for products or the like posted on an advertisement page more than in the past.

In addition, normally a search query is appropriate as a keyword describing not just the first product or the like but the second product or the like as well, and because a search query is designated more than when such is not the case, often the time until an advertisement page on which the second product or the like is posted is viewed by a user is shortened. Conversely, when the time from when a search query is designated until an advertisement page on which the second product or the like is posted is viewed by a user is short, often the search query that is a keyword describing the first product or the like is a keyword describing the second product or the like also. Furthermore, the number of Web pages that user views from when the search query is designated until a Web page on which the second product or the like in which the user has shown purchase intent is posted is also similar. Consequently, with this composition, the degree of importance correlated to the location of advertisement pages on which that second product or the like is posted is updated based on the required time from when the search query is designated by the user until a Web page on which the second product or the like in which that user has shown purchase intent is posted or the number of Web pages viewed by that user. Accordingly, even if the number of keywords correlated to an advertisement page increases, it is possible for a user to easily find a searched advertisement page based on priority.

### (Variation 4)

In this preferred embodiment, the description was such that when cart information is received during the period from when a search query is designated until purchase and payment of a product or the like is settled, the search device 100 correlates the search query to the purchase second product or the like ID included in the cart information as a keyword, but this is intended to be illustrative and not limiting. For example, it is possible to utilize a composition such that even when cart information is received during the period from when a search query was designated until purchase and payment of a product or the like is settled the search device 100 does not correlate the search query to the purchase second product or the like included in the cart information. In this composition, it is possible to utilize a composition such that when a settlement request is received, the search device 100 correlates the search query to the second product or the like ID included in that settlement request. With this composition, because the search query is correlated to the product or the like ID of the second product or the like which the user has not only simply shown purchase intent but has actually purchased in a bundle, it is possible to correlate an appropriate keyword not directly derived from an advertisement page on which the second product or the like is posted to that advertisement page.

### (Variation 5)

In this preferred embodiment, information indicating the degree of importance stored in the product or the like keyword table shown in FIG. 9A and 9B was described as correlated to attribute ID, product or the like ID and information indicating keyword. However, this is intended to be illustrative and not limiting, for it is possible to utilize a composition such that the information indicating degree of importance stored in the product or the like keyword table shown in FIG.9 is correlated to user ID, product or the like ID and information indicating keyword. For example, even among users of the same age range or users of the same sex, actors liked by each of the users will not necessarily be exactly the same. Consequently, with this composition, the degree of importance calculated for each user is stored for each user, so sales of a product or the like will increase more than in the case where the degree of importance is not stored for each user. Furthermore, information indicating degree of importance stored in the product or the like keyword table shown in FIG. 9A and 9B is correlated to information indicating keyword and product or the like ID, but it would be fine to utilize a composition such that correlation is not to either attribute ID or user ID.

It is possible to mutually combine the preferred embodiment and variations 1 through 5 of the preferred embodiments. Naturally, it is possible to provide a search device 200 provided with a composition for realizing functions according to any of the preferred embodiment and variations 1 through 5 of the preferred embodiment, and it is possible to provide a system comprising multiple devices and provided as a system as a whole with a composition for realizing functions according to any of the preferred embodiment and variations 1 through 5 of the preferred embodiment.

It is possible to mutually combine the preferred embodiment and variations 1 through 5 of the preferred embodiments. Naturally, it is possible to provide a search device 200 provided with a composition for realizing functions according to any of the preferred embodiment and variations 1 through 5 of the preferred embodiment, and by applying a program, it is possible to cause an existing search device 200 to function as a search device 200 according to any of the preferred embodiment and variations 1 through 5 of the preferred embodiment. In other words, through application such that it is possible for a search program for realizing each of the function compositions of the search device 200 illustrated by example in any of the above-described preferred embodiment and variations 1 through 5 of the preferred embodiment to be executed by a computer (CPU or the like) controlling an existing search device, it is possible to cause such to function as the search device 200 according to any of the preferred embodiment and variations 1 through 5 of the preferred embodiment.

The distribution method of such a program is arbitrary, and for example it is possible to store and distribute such on a recording medium such as a memory card, CD-ROM, DVD-ROM or the like or to distribute such via a communications medium such as the Internet or the like. In addition, it is possible to implement the search method according to the present invention using the search device 200 according to any of the preferred embodiment and variations 1 through 5 of the preferred embodiment.

Having described and illustrated the principles of this application by reference to one preferred embodiment, it should be apparent that the preferred embodiment may be modified in arrangement and detail without departing from the principles disclosed herein.

In addition, the above-described preferred embodiment was to explain the present invention and is not limiting as to the scope of the present invention. That is to say, the scope of the present invention is indicated by the scope of the Claims, not the preferred embodiment. Moreover, it is intended that the application be construed as including all such modifications and variations insofar as they come within the spirit and scope of the subject matter disclosed herein.

This application claims the benefit of Japanese Patent Application No. 2011-158899, filed on July 20, 2011, the entire disclosure of which is incorporated by reference herein.

The above-described embodiments are summarised in the following numbered clauses.
1. A search device comprising:
   a memory device for correlating and storing keywords describing a product or service, the degrees of importance of those keywords and the locations of Web pages in which the products or services are described;
   a searching part for searching the location of the Web page from the storage device based on a search query that is a keyword designated by a user and the degree of importance correlated to that keyword;
   an exhibiting part for exhibiting to the user a search result designating the location of the searched Web pages; and
   an updating part for updating the memory device, when information indicating that the user has an intent to purchase a first product or first service described in a Web page at the searched location and a second product or second service described in a Web page different from the Web page at the searched location before a prescribed period elapses from when the search query was designated by the user, by setting the designated search query as a keyword describing the second product or the second service, and by correlating and storing that keyword, the degree of importance of that keyword calculated by a prescribed statistical process and the location of a Web page in which the second product or the second service is described.
2. The search device according to clause 1, wherein:
   in the Web pages stored in the memory device, locations of related pages related to those Web pages are included;
   the memory device further correlates and stores the locations of related pages related to those Web pages to the locations of those Web pages; and
   the updating part is such that when a Web page viewed by the user using the locations of related Web pages included in the Web page at the searched location is a Web page in which the second product or second service which the user has shown the intent to purchase is described, the updating part correlates the location of that Web page to the designated search query.
3. The search device according to clause 1 or clause 2, wherein the updating part makes, as a search result, the result of sorting the locations of Web pages searched based on the search query in accordance with the degrees of importance stored by the memory device correlated to those locations.
4. The search device according to any one of clauses 1 to 3, wherein the updating part updates the degree of importance stored in the memory device correlated to the designated search query and the acquired location of Web page on the basis of one or more out of the amount paid through settlement of a bill including the purchase bill of the first product or the first service and the second product or the second service, the number of products or services purchased through the settlement, the number of types of products or services purchased through the settlement and the conversion ratio of the Web page in which the second product or the second service is described.
5. The search device according to any one of clauses 1 to 3, wherein the updating part updates the degree of importance stored in the memory device correlated to the designated search query and the acquired location of the Web page on the basis of the number of Web pages viewed by the user or the time needed from when the search query was designated by the user until the Web page in which the second product which the user has shown the intent to purchase is described is viewed.
6. The search device according to any one of clauses 1 to 5, wherein:
   the memory device correlates and stores the keyword, the degree of importance of that keyword calculated by the prescribed statistical process and the location of Web page in which the second product or the second service is described, for each attribute of the user; and
   the searching part sets as the search result the result of sorting the locations of the Web pages searched on the basis of the search query in accordance with the degrees of importance stored by the memory device correlated to those locations and the attribute of the user.
7. A program for causing a computer to function as:
   a memory device for correlating and storing keywords describing a product or service, the degrees of importance of those keywords and the locations of Web pages in which the products or services are described;
   a searching part for searching the location of the Web pages from the storage device based on a search query that is a keyword designated by a user and the degree of importance correlated to that keyword;
   an exhibiting part for exhibiting to the user a search results designating the location of the searched Web pages; and
   an updating part such that when information indicating that the user has an intent to purchase a first product or first service described in a Web page at the searched location and a second product or second service described in a Web page different from the Web page at the searched location before a prescribed period elapses from when the search query was designated by the user, the updating part sets the designated search query as a keyword describing the second product or the second service and updates the memory device by correlating and storing that keyword, the degree of importance of that keyword calculated by a prescribed statistical process and the location of a Web page in which the second product or the second service is described.
8. A computer-readable recording medium on which is recorded a search program for causing a computer to function as:
   a memory device for correlating and storing keywords describing a product or service, the degrees of importance of those keywords and the locations of Web pages in which the products or services are described;
   a searching part for searching the location of the Web pages from the storage device based on a search query that is a keyword designated by a user and the degree of importance correlated to that keyword;
   an exhibiting part for exhibiting to the user a search results designating the location of the searched Web pages; and
   an updating part such that when information indicating that the user has an intent to purchase a first product or first service described in a Web page at the searched location and a second product or second service described in a Web page different from the Web page at the searched location before a prescribed period elapses from when the search query was designated by the user, the updating part sets the designated search query as a keyword describing the second product or the second service and updates the memory device by correlating and storing that keyword, the degree of importance of that keyword calculated by a prescribed statistical process and the location of a Web page in which the second product or the second service is described.
9. A search method including:
   a searching step in which, from a memory device for correlating and storing keywords describing a product or service, the degrees of importance of those keywords and the locations of Web pages in which the products or services are described, the location of the Web pages from the storage device based on a search query that is a keyword designated by a user and the degree of importance correlated to that keyword is searched;
   an exhibition step in which a search results designating the location of the searched Web pages is exhibited to the user; and
   an updating step in which the memory device is updated, when information indicating that the user has an intent to purchase a first product or first service described in a Web page at the searched location and a second product or second service described in a Web page different from the Web page at the searched location before a prescribed period elapses from when the search query was designated by the user, by setting the designated search query as a keyword describing the second product or the second service, and by correlating and storing that keyword, the degree of importance of that keyword calculated by a prescribed statistical process and the location of a Web page in which the second product or the second service is described.

### Reference Signs List

10 Communication network
101, 102 Terminal device
200 Search device
200a CPU
200b ROM
200c RAM
200d Hard disk
200e Media controller
200f LAN card
200g Video card
200h LCD
200i Keyboard
200j Speaker
200k Touch pad
210 Information storage device
220 Acquiring part
230 Searching part
240 Exhibiting part
250 Settling part
260 Updating part

## Claims

1. A search device (200) comprising:
a memory device (210) for correlating and storing keywords describing a product or service, degrees of importance of those keywords and locations of Web pages in which the products or services are described;
a searching part (230) for searching the locations of the Web pages from the memory device (210) based on a search query that is a keyword designated by a first user and setting, as a search result, a result of sorting the searched locations of the Web pages in accordance with the degrees of importance correlated to the searched locations of the Web pages and the keyword;
an exhibiting part (240) for exhibiting the search result to the first user; and
an updating part (260) for updating the memory device (210), when information is acquired which indicates that the first user has an intent to purchase a first product or first service described in the Web page at the searched location and a second product or second service described in a Web page different from the Web pages at the searched locations before a prescribed period elapses from when the search query was designated by the first user, by setting the designated search query as a keyword describing the second product or the second service, and by correlating and storing that keyword and the location of the Web page in which the second product or the second service is described, wherein
the updating part (260) is arranged to update the degree of importance of the keyword correlated to the location of the Web page in which the second product or the second service is described, to a higher degree compared to the previous degree when information is acquired, which indicates that the first user or a second user different from the first user has an intent to purchase both of the second product or second service and a product or service that differs from the second product or second service and that is described in a Web page at a location correlated to the keyword before the prescribed period elapses from when the keyword was re-designated as a search query by the first user or the second user.

2. The search device (200) according to Claim 1, wherein:
in the Web pages that exist at the locations stored in the memory device (210), locations of related pages related to those Web pages are included;
the memory device (210) is further arranged to correlate and store the locations of the related pages related to those Web pages to the locations of those Web pages; and
the updating part (260) is arranged such that when the Web page viewed by the first user using the locations of the related Web pages included in the Web page at the searched location is the Web page in which the second product or second service which the first user has shown the intent to purchase is described, the updating part (260) correlates the location of that Web page to the designated search query.

3. The search device (200) according to Claim 1 or Claim 2, wherein
the updating part (260) is arranged to update the degree of importance stored in the memory device (210) correlated to the designated search query and the location of the Web page in which the second product or second service is described, on the basis of one or more out of the amount paid through settlement of a bill including the purchase bill of the first product or the first service and the second product or the second service, the number of products or services purchased through the settlement, the number of types of products or services purchased through the settlement and the conversion ratio of the Web page in which the second product or the second service is described.

4. The search device (200) according to Claim 1 or Claim 2, wherein
the updating part (260) is arranged to update the degree of importance stored in the memory device (210) correlated to the designated search query and the location of the Web page in which the second product or second service is described, on the basis of the number of Web pages viewed by the first user or the time needed from when the search query was designated by the first user until the Web page in which the second product or second service which the first user has shown the intent to purchase is described is viewed.

5. The search device (200) according to any one of Claims 1 to 4, wherein:
the memory device (210) is arranged to correlate and store the keyword, the degree of importance of that keyword and the location of the Web page in which the second product or the second service is described, for each attribute of user; and
the searching part (230) is arranged to set, as the search result, a result of sorting the locations of the Web pages searched on the basis of the search query and an attribute of the first user in accordance with the degrees of importance stored by the memory device (210) correlated to those locations and the attribute of the first user.

6. A program for causing a computer to function as:
a memory device (210) for correlating and storing keywords describing a product or service, degrees of importance of those keywords and locations of Web pages in which the products or services are described;
a searching part (230) for searching the locations of the Web pages from the memory device (210) based on a search query that is a keyword designated by a first user and setting, as a search result, a result of sorting the searched locations of the Web pages in accordance with the degrees of importance correlated to the searched locations of the Web pages and the keyword;
an exhibiting part (240) for exhibiting to the first user the search result; and
an updating part (260) for updating the memory device (210), when information is acquired which indicates that the first user has an intent to purchase a first product or first service described in the Web page at the searched location and a second product or second service described in a Web page different from the Web pages at the searched locations before a prescribed period elapses from when the search query was designated by the first user, by setting the designated search query as a keyword describing the second product or the second service, and by correlating and storing that keyword and the location of the Web page in which the second product or the second service is described, wherein
the updating part (260) updates the degree of importance of the keyword correlated to the location of the Web page in which the second product or the second service is described, to a higher degree compared to the previous degree when information is acquired, which indicates that the first user or a second user different from the first user has an intent to purchase both of the second product or second service and a product or service that differs from the second product or second service and that is described in a Web page at a location correlated to the keyword before the prescribed period elapses from when the keyword was re-designated as a search query by the first user or the second user.

7. A computer-readable recording medium on which is recorded a search program for causing a computer to function as:
a memory device (210) for correlating and storing keywords describing a product or service, degrees of importance of those keywords and locations of Web pages in which the products or services are described;
a searching part (230) for searching the locations of the Web pages from the memory device (210) based on a search query that is a keyword designated by a first user and setting, as a search result, a result of sorting the searched locations of the Web pages in accordance with the degrees of importance correlated to the searched locations of the Web pages and the keyword;
an exhibiting part (240) for exhibiting to the first user the search result; and
an updating part (260) for updating the memory device (210), when information is acquired which indicates that the first user has an intent to purchase a first product or first service described in the Web page at the searched location and a second product or second service described in a Web page different from the Web pages at the searched locations before a prescribed period elapses from when the search query was designated by the first user, by setting the designated search query as a keyword describing the second product or the second service, and by correlating and storing that keyword and the location of the Web page in which the second product or the second service is described, wherein
the updating part (260) updates the degree of importance of the keyword correlated to the location of the Web page in which the second product or the second service is described, to a higher degree compared to the previous degree when information is acquired, which indicates that the first user or a second user different from the first user has an intent to purchase both of the second product or second service and a product or service that differs from the second product or second service and that is described in a Web page at a location correlated to the keyword before the prescribed period elapses from when the keyword was re-designated as a search query by the first user or the second user.

8. A search method executed by a search device (200) comprising a searching part (230), an exhibiting part (240) and an updating part (260), the search method including:
a searching step in which the searching part (230) searches, from a memory device (210) for correlating and storing keywords describing a product or service, degrees of importance of those keywords and locations of Web pages in which the products or services are described, the locations of the Web pages based on a search query that is a keyword designated by a first user and sets, as a search result, a result of sorting the searched locations of the Web pages in accordance with the degrees of importance correlated to the searched locations of the Web pages and the keyword;
an exhibition step in which the exhibiting part (240) exhibits to the first user the search result;
a first updating step in which the updating part (260) updates the memory device (210) when information is acquired which indicates that the first user has an intent to purchase a first product or first service described in the Web page at the searched location and a second product or second service described in a Web page different from the Web pages at the searched locations before a prescribed period elapses from when the search query was designated by the first user, by setting the designated search query as a keyword describing the second product or the second service, and by correlating and storing that keyword and the location of the Web page in which the second product or the second service is described; and
a second updating step in which the updating part (260) updates the degree of importance of the keyword correlated to the location of the Web page in which the second product or the second service is described, to a higher degree compared to the previous degree when information is acquired, which indicates that the first user or a second user different from the first user has an intent to purchase both of the second product or second service and a product or service that differs from the second product or second service and that is described in a Web page at a location correlated to the keyword before the prescribed period elapses from when the keyword was re-designated as a search query by the first user or the second user.
